# EUROPEAN PATENT SPECIFICATION

(11) **EP 1 059 441 B1**
(45) Date of publication and mention of the grant of the patent: **20.04.2005**
(21) Application number: 00109979.5
(22) Date of filing: 11.05.2000
(51) Int. Cl.: F02N 11/08

(54) **Automatic engine stoppage/start-up control system**
Automatisches Steuerungssystem zum Abstellen und erneutem Starten eines Motors
Système de commande automatique d'arrêt/redémarrage pour moteur

(30) Priority: 07.06.1999 JP 16016799
(43) Date of publication of application: 13.12.2000
(73) Proprietor: Honda Giken Kogyo Kabushiki Kaisha, Minato-ku, Tokyo (JP)
(72) Inventor: Shimmura, Hiroyuki, K. K. Honda Gijutsu Kenkyusho, Wako-shi, Saitama (JP); Kawame, Kazunori, K. K. Honda Gijutsu Kenkyusho, Wako-shi, Saitama (JP); Kawamoto, Shuichi, K. K. Honda Gijutsu Kenkyusho, Wako-shi, Saitama (JP); Yanagisawa, Takeshi, K. K. Honda Gijutsu Kenkyusho, Wako-shi, Saitama (JP)
(74) Representative: Liska, Horst, Dr.

(56) References cited:
- FR-A- 2 246 412
- US-A- 4 381 042
- PATENT ABSTRACTS OF JAPAN vol. 1999, no. 04, 30 April 1999 (1999-04-30) & JP 11 013607 A (HANSHIN ELECTRIC CO LTD), 19 January 1999 (1999-01-19)

## Description

The present invention relates to an automatic engine stoppage/start-up control system for stopping, in the case of shopping a vehicle in the running state, an engine in response to a specific vehicle-stopping condition, and restarting, after stoppage of the engine, the engine in response to a specific vehicle-starting operation.

An engine stoppage/start-up control system intended to suppress occurrence of exhaust gas and fuel consumption particularly upon idling, from the viewpoint of environmental protection and energy saving has been disclosed, for example, in Japanese Patent Laid-open No. Hei 4-246252. In the control system disclosed in the above patent, it is operated such that when a vehicle is stopped, an engine is automatically stopped, and when throttle grips are operated so as to instruct the start-up of the vehicle in the stoppage state, the engine is automatically restarted, to thereby start the vehicle.

On the other hand, a light vehicle such as a motorcycle or motor-tricycle is often pushed for movement by a driver. In this case, the vehicle is supported by the driver, holding right and left throttle of a handlebar by her/his hands, like when she/he drives it. Accordingly, in the case of applying the above-described engine stoppage/start-up control system to a motorcycle or the like, it may be desirable to judge whether the throttle is intentionally opened by a driver or the throttle is opened irrespective of the intention of the driver, and to prohibit the start-up of the engine if the throttle is opened irrespective of the intention of the driver.

The present applicant has disclosed, in Japanese Patent Application No. Hei 10-82595, an engine stoppage/start-up control system characterized by detecting whether or not a driver sits on a seat; deciding, if the throttle is opened in a state in which the driver sits on the seat, that an accelerator is intentionally operated by the driver; and automatically starting the engine.

When the engine is automatically stopped after the vehicle is stopped as described above, there is a possibility that the driver leaves the vehicle without turning-off a main power source and then when the driver returns to the vehicle afterwards, she/he may forget that the engine is under the automatic stoppage control and may operate the starter switch for the purpose of starting the engine.

According to the above-described prior art control system, however, since the start-up of the engine by the starter switch is, after the engine is automatically stopped, prohibited and is permitted only by opening of accelerator grips, the driver cannot start the engine by merely operating the starter switch. As a result, there occurs a problem that it requires a lot of labor to start the engine.

JP 11 013607 discloses an automatic engine stoppage/start-up control system according to the preamble of claim 1. There, when a user turns off the key switch after driving the vehicle and the ignition switch contact is open, the voltage of the ignition is not abruptly decreased. Instead, the engine continuous running for a specific time (after idling state), and then stops. When the driver stays in the vehide (seat contact closed) the automatic restart of the engine is prohibited, if the key switch is off. However, when the driver gets off the vehicle (seat contact off) and closes the door the engine is stopped by opening the ignition contact to be in a safety state at the next automatic starting of the engine.

An object of the present invention is to solve the above-described problems of the prior art system, and to provide an engine stoppage/start-up control system enabling the start-up of the engine by a starter switch, with a timing where the driver can experimentally start the engine by the starter switch.

To achieve the object, according to the present invention, there is provided an automatic engine stoppage/start-up control system for stopping, in the case of stopping a vehicle in the running state, an engine in response to a specific vehicle-stopping condition, and restarting, after stoppage of the engine, the engine in response to a accelerator operation, wherein said control system comprises:
a starter switch (258) for starting the engine;
starter control means (160) for prohibiting the start-up of the engine by said starter switch (258) after the engine is stopped in response to said specific vehicle-stopping condition; characterized by
seating detecting means (254) for detecting the seating state of a driver; and
first non-seating state after vehicle-stoppage control means (300) for exceptionally permitting the start-up of the engine by said starter switch(258) if it is detected by said seating detecting means (254) that the non-seating state of the driver is continued for a specific time after the engine is stopped in response to said specific vehicle-stopping condition.

According to this feature, the start-up of the engine by the starter switch is exceptionally permitted even after the engine is stopped in response to the specific vehicle-stopping condition, if it is detected that the non-seating state of the driver is continued for a specific time. As a result, if the driver leaves the vehicle after automatic stoppage of the engine upon stoppage of the vehicle, and then when the driver returns to the vehicle forgetting that the engine is under the automatic stoppage control and operates the starter switch, he can start the engine in the same manner as that in the usual state in which the engine is not under the automatic stoppage control. The first non-seating state after vehicle stoppage control means exceptionally permits start-up of the engine, or the second non-seating state after vehicle stoppage control means cuts off the mainpower source, if the non-seating state of the driver is continued for a specific time.

Hereinafter, the present invention will be described in detail with reference to the drawings.
Fig. 1 is a side view showing the entire configuration of a scooter-type motorcycle on which the engine starter to which the present invention is applied is mounted.
Fig. 2 is a plan view of an instrument panel and its neighborhood of the scooter type motorcycle.
Fig. 3 is a schematic view showing the outline of a seating state detecting unit.
Fig. 4 is a sectional view taken on line A-A of the engine shown in Fig. 1.
Fig. 5 is a sectional side view of a cylinder head of the engine and its neighborhood.
Fig. 6 is a sectional view of the drive side of an automatic transmission.
Fig. 7 is a sectional view of the driven side of the automatic transmission.
Fig. 8 is a sectional view showing an oil circulating unit.
Fig. 9 is a sectional side view showing the arrangement of a crank sensor.
Fig. 10 is a sectional front view showing the arrangement of the crank sensor.
Fig. 11 is a block diagram showing an engine start-up/stoppage control system according to one embodiment of the present invention.
Fig. 12 is a block diagram showing the function of a main control unit.
Fig. 13 is a block diagram, continued from that shown in Fig. 12, showing the function of the main control unit.
Fig. 14 is a block diagram, continued from that shown in Fig. 13, showing the function of the main control unit.
Fig. 15 is a block diagram, continued from that shown in Fig. 14, showing the function of the main control unit.
Fig. 16 is a list of main operations of the main control unit.
Fig. 17 is a list of the main operations of the main control unit, continued from those shown in Fig. 16.
Fig. 18 is a diagram showing conditions for switching operational modes from each other.
Fig. 19 is a diagram showing a relationship between an engine speed Ne, a throttle opening degree θ, and a standard ignition timing.
Fig. 20 is a graph showing a relationship between the engine speed and the ignition timing.

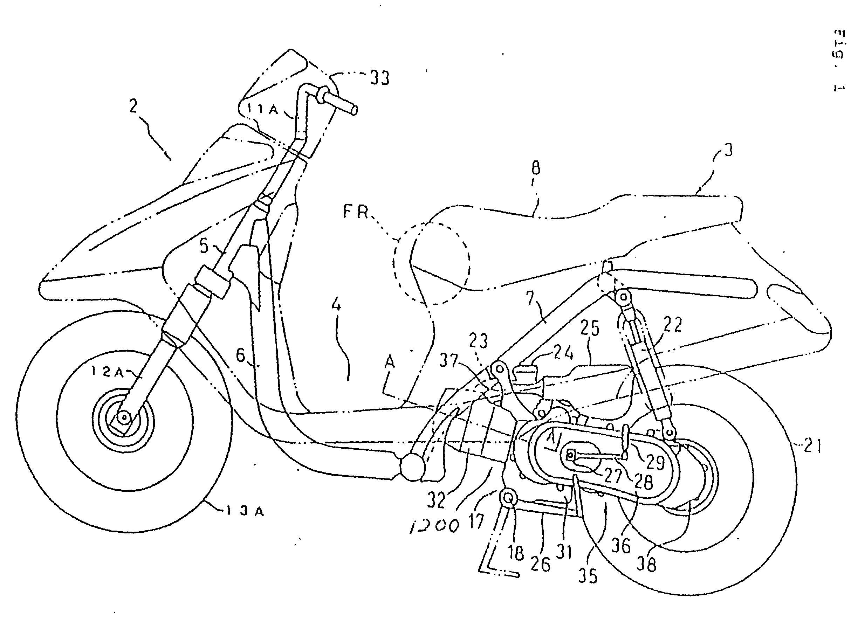

Fig. 1 is a side view of the entire configuration of a motorcycle on which an engine stoppage/start-up automatic control unit according to one embodiment of the present invention is mounted. Referring to Fig. 1, a body front 2 is connected to a body rear 3 via a low floor 4. A body frame, which constitutes the skeletal structure of a vehicular body, basically includes a down tube 6 and a main pipe 7. A fuel tank and a luggage box (both not shown) are supported by the main pipe 7, and a seat 8 is disposed over both the fuel tank and the luggage box. The seat 8 serves as a lid of the luggage box provided on the underside of the seat 8, and is turnably supported by a hinge mechanism (not shown) provided on a front portion FR of the seat 8 for opening/closing the luggage box.

At the body front 2, a steering head 5 is provided on the down tube 6, and a front fork 12A is rotatably supported by the steering head 5. A handlebar 11A is mounted on a portion upwardly extending from the front fork 12A, and a front wheel 13A is rotatably supported by the downwardly extending leading ends of the front fork 12A. An upper portion of the handlebar 11A is covered with a handle cover 33 serving as an instrument panel.

A link member (hanger) 37 is turnably supported by an intermediate portion of the main pipe 7, and a swing unit 17 is swingably connected to and supported by the main pipe 7 via the hanger 37. A single-cylinder/four-cycle engine 1200 is mounted on a front portion of the swing unit 17. A belt-type continuously variable transmission 35 is provided in such a manner as to extend rearwardly from the engine 1200. A reduction mechanism 38 is connected to the continuously variable transmission 35 via a centrifugal clutch mechanism to be described later, and a rear wheel 21 is rotatably supported by the reduction mechanism 38. A rear cushion 22 is interposed between the upper end of the reduction mechanism 38 and an upper bend portion of the main pipe 7. An intake pipe 23 extending from a cylinder head 32 of the engine 1200 is connected to a front portion of the swing unit 17, and a carburetor 24 is connected to the intake pipe 23. An air cleaner 25 is connected to the carburetor 24.

The base end of a kick arm 28 is fixed to a kick shaft 27 projecting from a transmission case cover 36 of the belt-type continuously variable transmission 35, and a kick pedal 29 is provided at the leading end of the kick arm 28. A pivot 18 is provided at a lower portion of a swing unit case 31, and a main stand 26 is pivotably mounted to the pivot 18. Upon parking of the motorcycle, the main stand 26 is raised as shown by a chain line in Fig. 1.

Fig. 2 is a plan view showing an instrument panel and its neighborhood of the motorcycle. A speed meter 193, a stand-by indicator 256, and a battery indicator 276 are provided in an instrument panel 192 of the handle cover 33. As will be described in detail later, upon stoppage of the engine under engine stoppage/start-up control, the stand-by indicator 256 flashes to warn the driver that the engine is immediately started and the vehicle can be started, if a throttle valve is opened. If the battery voltage is reduced, the battery indicator 276 lights up to warn the driver that the charged amount of power in the battery is deficient.

The handle cover 33 is provided with an idle switch 253 for permitting or restricting idling, and a starter switch 258 for starting a starter motor (cell motor). The right end portion of the handlebar 11 has a throttle grip 194 and a brake lever 195. In addition, roots of the right and left throttle grips include a horn switch, a winker switch, and the like as in the prior art motorcycle; however, such components are not shown in Fig. 2.

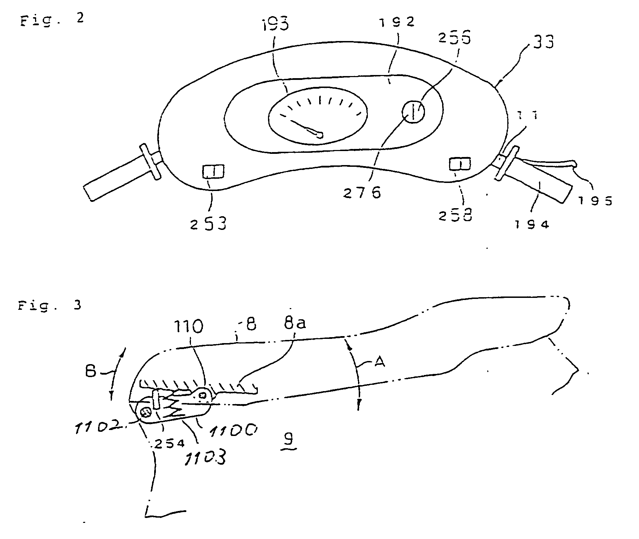

The configurations of a hinge portion for opening/closing the seat 8 and a seating switch disposed near the hinge portion will be described below. Fig. 3 is a schematic view showing the structure of the hinge portion for opening/closing the seat 8. Referring to Fig. 3, the seat 8 serving as a lid of the luggage box 9a is Provided in such a manner as to be openable/closable in the direction shown by an arrow A relative to the luggage box 9a. To make the seat 8 openable/closable, the luggage box 9a is provided with a hinge shaft 1102 and a link member 1100 swingable around the hinge shaft 1102. The other end, opposed to the end connected to the hinge shaft 1102, of the link member 1100 is turnably connected to a second hinge shaft 110 provided on a frame 8a of the seat 8. As a result, the seat 8 can be swung around the hinge shaft 1102 in the direction shown by the arrow A and can be also swung around the second hinge shaft 110 in the direction shown by an arrow B.

A spring 1103 is interposed between the link member 1100 and the frame 8a for biasing the seat 8 clockwise around the second hinge shaft 110. A seating switch 254 is also provided between the link member 1100 and the frame 8a. When the driver sits on the seat 8 and the frame 8a is turned by a specific amount counterclockwise around the second hinge shaft 110, the seating switch 156 is turned on for detecting the seating state.

The engine 1200 will be described in detail. Fig. 4 is a sectional view of a starter/generator connected to a crank shaft of the engine, which is equivalent to a sectional view taken on line A-A of Fig. 1.

Referring to Fig. 4, a crank shaft 12 is rotatably supported via main bearings 10 and 11 by the swing unit case 31 having the hanger 37 supported by the main pipe 7, and a connecting rod 14 is connected to the crank shaft 12 via crank pin 13. An inner rotor 15 of a starter/generator is provided on one end portion of the crank shaft 12 projecting from a crank chamber 9.

The inner rotor 15 has a rotor boss 16 and permanent magnets 19 fitted around the outer peripheral surface of the rotor boss 16. In this embodiment, six pieces of the permanent magnets 19 made from neodymium iron boron based alloy are spaced at equal angular intervals around the crank shaft 12. The center hole of the rotor boss 16 is fitted around a tip taper portion of the crank shaft 12. A flange member 39 is disposed at one end (on the side opposed to the crank shaft 12) of the rotor boss 16. The rotor boss 16 is fixed, together with the flange member 39, to the crank shaft 12 with a bolt 20.

The rotor boss 16 has a small diameter cylindrical portion 40 projecting on the flange member 39 side, and a bush holder 41 is slidably provided on the outer periphery of the cylindrical portion 40. The bush holder 41 is biased in the direction of the flange member 39 by a compression coil spring 42. Brushes 44 biased by the compression coil spring 42 are provided on the bush holder 41. A connecting pin 45 extending in parallel to the center axis of the crank shaft 12 passes through the rotor boss 16. One end of the connecting shaft 45 is fixed to the brush holder 41 and the other end thereof is connected to a plate 46 of a governor to be described in detail later.

A stator core 48 of an outer stator 47 disposed around the outer periphery of the inner rotor 15 is fixed to the swing unit case 31 with a bolt 49. A power-generation coil 50 and a starting coil 51 are wound around a yoke 48a of the stator core 48. A cylindrical portion 48b extends from the stator core 48 in such a manner as to cover the bush holder 41. A commutator holder 52 is connected to the end portion of the cylindrical portion 48b, and commutator pieces 53 are fixed to the commutator holder 52 in such a manner as to be brought into slide-contact with the brushes 44. To be more specific, the commutator pieces 53 are disposed at positions facing to the brushes 44 biased by the compression coil spring 42.

Although only one brush 44 is shown in Fig. 4, the necessary number of the brushes 44 are actually provided along the rotational direction of the inner rotor 15. One example regarding the numbers and shapes of the brushes and commutator pieces has been described in the specification of the prior application (Japanese Patent Laid-open No. Hei 9-215292) filed by the present applicant. The stroke of the brushes 44 is limited to a specific amount in order that the brushes 44 are separated from the commutator pieces 53 when the brush holder 41 is offset on the crank shaft 12 side by the governor to be described later. A locking means (not shown) for limiting the stroke of the brushes 44 is interposed between the brush holder 41 and the brushes 44.

A governor 54 for automatically switching an engine-starting mode and a power-generation mode from each other is provided at the end portion, fitted to the crank shaft 12, of the rotor boss 16. The governor 54 includes the above-described plate 46 and a roller 55 as a governor weight for offsetting the plate 46 toward the center of the crank shaft 12 in the longitudinal direction. The roller 55 is preferably configured as a metal core covered with a resin cover; however, it may be configured as only a metal core or a resin made core. The rotor boss 16 has a pocket 56 for housing the roller 55. The pocket 56 has a taper in cross-section which is made narrower on the outer stator 47 side.

A radiator fan 57 is mounted on the flange member 39, and a radiator 58 is disposed opposite to the radiator fan 57. A sprocket 59 is fixed on the crank shaft 12 at a position between the inner rotor 15 and the main bearing 11. A chain 60 for transmitting a power from the crank shaft 12 for driving a cam shaft (see Fig. 5) is wound around the sprocket 59. The sprocket 59 is integrated with a gear 61 for transmitting a power to a pump for circulating lubricating oil. The gear 61 transmits a power to a gear fixed to a drive shaft of a trochoidal pump to be described later.

With this configuration, when the starter switch is depressed to apply a voltage to the commutator pieces 53 by a battery (not shown), a current flows in the starting coil 51 through the brushes 44, whereby the inner rotor 15 is rotated. As a result, the crank shaft 12 connected to the inner rotor 15 is rotated, to thereby start the engine 1200. As the rotational speed of the engine 1200 is increased, a centrifugal force is applied to the governor weight 55, so that the governor weight 55 is moved in the pocket 56 in the outer peripheral direction of the rotor boss 16, to reach a position shown by a chain line in Fig. 4.

Along with the movement of the governor weight 55, the plate 46 and the connecting pin 45 connected thereto are offset as shown by chain lines in Fig. 4. Since the other end of the connecting pin 45 is engaged with the brush holder 41, the brush holder 41 is also offset. The stroke of the brushes 44 is limited as described above, and therefore, when the brush holder 41 is offset by a distance larger than the critical stroke, the contact between the brushes 44 and the commutator pieces 53 is released. After the brushes 44 are separated from the commutator pieces 53, the crank shaft 12 is rotated by the engine, so that an electric power is generated by the power-generation coil 51, to supply a current to the battery.

The structure of the head and its neighborhood of the engine 1200 will be described below. Fig. 5 is a sectional side view of the head and its neighborhood of the engine. A piston 63 disposed in a cylinder 62 is connected to a small end side of the connecting rod 14 via a piston pin 64. An ignition plug 65 is screwed in the cylinder head 32 in such a manner that an electrode portion thereof faces to a combustion chamber formed between the head of the piston 63 and the cylinder head 32. The cylinder 62 is surrounded by a water jacket 66.

A cam shaft 69 rotatably supported by bearings 67 and 68 is provided in the cylinder head 32 at a position over the cylinder 62. An attachment 70 is fitted to the cam shaft 69. A cam sprocket 72 is fixed to the attachment 70 with a bolt 71. The chain 60 is wound around the cam sprocket 72. The rotation of the above-described sprocket 59 (see Fig. 4), that is, the rotation of the crank shaft 12 is transmitted to the cam shaft 69 via the chain 60.

Rocker arms 73, which are provided over the cam shaft 69, are rocked in accordance with the cam shape of the cam shaft 69 when the cam shaft 69 is rotated. The cam shape of the cam shaft 69 is determined such that an intake valve 95 and an exhaust valve 96 are opened/closed in accordance with a specific stroke of the four-cycle engine. The intake pipe 23 is opened/closed by the intake valve 95, and an exhaust pipe 97 is opened/closed by the exhaust valve 96.

An exhaust cam and an intake cam are integrally formed on the cam shaft 69, and a decompression cam 98 engaged with the cam shaft 69 only in the reverse rotation direction is provided adjacently to these exhaust and intake cams. When the cam shaft 69 is reversely rotated, the decompression cam 98 is turned while following the rotation of the cam shaft 69 in such a manner as to project from the outer peripheral shape of the exhaust cam.

Accordingly, the exhaust valve 96 can be slightly lifted upon normal rotation of the cam shaft 69, so that the load at the compression stroke of the engine can be reduced. This makes it possible to make small a torque upon starting the rotation of the crank shaft, and hence to reduce the size of the starter of the four-cycle engine. As a result, it is possible to make compact the crank and its neighborhood and hence to make large the bank angle. In addition, after the cam is normally rotated for a while, the outer shape of the decompression cam 98 is returned within the outer peripheral shape of the exhaust cam.

A pump chamber 76 surrounded by a water pump base 74 and a water pump housing 75 is formed in the cylinder head 32. A pump shaft 78 having an impeller 77 is disposed in the pump chamber 76. The pump shaft 78 is fitted to the end portion of the cam shaft 69, and is rotatably supported by a bearing 79. A drive force of the pump shaft 78 is obtained by a pin 80 engaged with the center portion of the cam sprocket 72.

An air reed valve 94, which sucks air when a negative pressure occurs in the exhaust pipe 97 to thereby improve the emission, is provided in a head cover 81. While seal members are provided around the pump chamber 76, the description thereof is omitted.

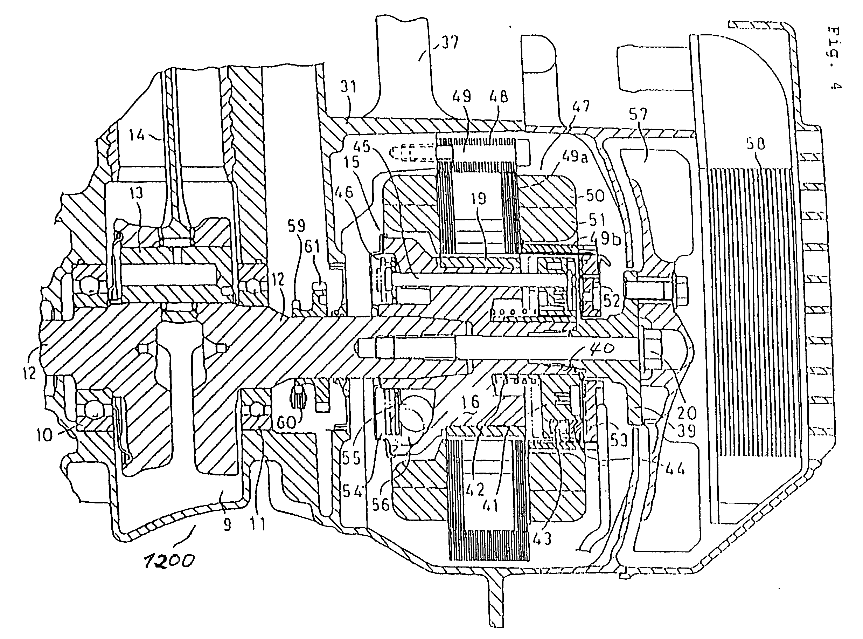

An automatic transmission for changing the rotational speed of the engine 1200 and transmitting the rotational speed of the engine thus changed to a rear wheel will be described below. Figs. 6 and 7 are sectional views showing a drive side portion and a driven side portion of the automatic transmission of the engine, respectively.

Referring to Fig. 6, a pulley 83 around which a V-belt 82 is wounded is provided at the end portion, on the side opposed to the side on which the inner rotor 15 of the above-described starter/generator is provided, of the crank shaft 12. The pulley 83 is composed of a fixed pulley piece 83a and a movable pulley piece 83b. The fixed pulley piece 83a is fixed in its movement relative to the crank shaft 12 in both the rotational and axial directions. The movable pulley piece 83b is slidable relative to the crank shaft 12 in the axial direction. A holder plate 84 is mounted on the back surface, which is not in contact with the V-belt 82, of the movable pulley piece 83b. The holder plate 84 is restricted in its movement relative to the crank shaft 12 in both the rotational and axial directions, that is, rotated together with the crank shaft 12. The space surrounded by the holder plate 84 and the movable pulley piece 83b forms the pocket for housing the roller 85 as the governor weight.

On the other hand, a clutch mechanism for transmitting a power to the rear wheel 21 is configured as follows. Referring to Fig. 7, a main shaft 125 of the clutch is supported by a bearing 127 fitted in a case 126 and a bearing 129 fitted in a gear box 128. A fixed pulley piece 132a of a pulley 132 is supported by the main shaft 125 via bearings 130 and 131. A cup-shaped clutch plate 134 is fixed to an end portion of the main shaft 125 by means of a nut 133.

A movable pulley piece 132b of the pulley 132 is provided on a sleeve 135 of the fixed pulley piece 132a in such a manner as to slidable in the longitudinal direction of the main shaft 125. The movable pulley piece 132b is engaged with a disk 136 in such a manner as to be movable around the main shaft 125 integrally with the disk 136. A compression coil spring 137 is provided between the disk 136 and the movable pulley piece 132b for imparting a repulsive force thereto in the direction where a distance therebetween is extended. A shoe 139 swingably supported by a pin 138 is provided on the disk 136. When the rotational speed of the disk 136 is increased, the shoe 139 is swingably moved in the outer peripheral direction by the centrifugal force applied thereto, and is brought into contact with the inner periphery of the clutch plate 134. A spring 140 is provided in order that when the rotational speed of the disk 136 reaches a specific value, the shoe 139 is brought into contact with the clutch plate 134.

A pinion 141, which is fixed on the main shaft 125, is meshed with a gear 143 fixed to an idle shaft 142. A pinion 144 fixed to the idle shaft 142 is meshed with a gear 146 of an output shaft 145. The rear wheel 21 is composed of a rim 21a and a tire 21b fitted around the periphery of the rim 21a, and the rim 21a is fixed to the output shaft 145.

With this configuration, when the engine speed is minimized, the roller 85 is located at a position shown by a solid line in Fig. 6 and thereby the V-belt 82 is wound around the minimum diameter portion of the pulley 83. The movable pulley piece 132b of the pulley 132 is biased by the compression coil spring 137 to be offset to a position shown by a solid line in Fig. 7, so that the V-belt 82 is wound around the maximum diameter portion of the pulley 132. In such a state, since the main shaft 125 of the centrifugal clutch is rotated at the minimum speed, the centrifugal force applied to the disk 136 is minimized, with a result that the shoe 139 is drawn inwardly by the biasing force of the spring 140 and is thereby not brought into contact with the clutch plate 134. That is to say, the rotation of the engine is not transmitted to the main shaft 125, so that the axle 21 is not rotated.

As the engine speed becomes large, the roller 85 is offset in the outer peripheral direction by the centrifugal force applied thereto. The offset position of the roller 85 is shown by the chain line in Fig. 6. When the roller 85 is offset in the outer peripheral direction, the movable pulley piece 83b is pushed to the fixed pulley piece 83a side, so that the V-belt 82 is moved to the maximum diameter side of the pulley 83. On the centrifugal clutch side, the movable pulley piece 132b, which overcomes the biasing force of the compression coil spring 137, is offset in the direction where it is separated from the fixed pulley piece 132a, so that the V-belt 82 is moved to the minimum diameter side of the pulley 132. Accordingly, since the centrifugal force applied to the disk 136 is increased, the shoe 139 overcomes the biasing force of the spring 140 and projects outwardly, to be thus brought into contact with the clutch plate 134. As a result, the engine speed is transmitted to the main shaft 125, and the power is transmitted to the axle 21 via a gear train. In this way, the winding diameter of the V-belt 82 around the pulley 83 on the crank shaft 12 side and the pulley 132 on the centrifugal clutch side is changed in accordance with the engine speed, with a result that the speed change action is thus achieved.

Upon start-up of the engine, as described above, the engine can be started by applying a current to the starting coil 51; however, in this embodiment, a kick starter for starting the engine 1200 by depressing the kick pedal is additionally provided.

The kick starter will be described in detail with reference to Fig. 6. A driven dog gear 86 for kick starting is fixed on the back surface of the fixed pulley piece 83a. Meanwhile, a supporting shaft 88 having a helical gear 87 is rotatably supported on the cover 36 side. A cap 89 is fixed to an end portion of the supporting shaft 88, and a drive dog gear 90 meshed with the driven dog gear 86 is formed on an end surface of the cap 89.

The kick shaft 27 is turnably supported on the cover 36, and a sector helical gear 91 to be meshed with the helical gear 87 is welded to the kick shaft 27. The kick arm 28 (see Fig. 7) is spline-connected to an end portion, projecting outwardly from the cover 36, of the kick shaft 27. In the figure, reference numeral 92 and 93 designate return springs.

With this configuration, when the kick pedal 29 is depressed, the kick shaft 27 and the sector helical gear 91, which overcome the biasing force of the return spring 93, are turned. The mutual twisting direction of the helical gear 87 and the sector helical gear 91 is set such that when the sector helical gear 91 is turned by depressing the kick pedal, the helical gears 87 and 91 generate a force for biasing the supporting shaft 88 on the pulley 83 side. Accordingly, when the kick pedal 29 is depressed, the supporting shaft 88 is offset to the pulley 83 side, so that the drive dog gear 90 formed on the end surface of the cap 89 is meshed with the driven dog gear 86. As a result, the crank shaft 12 is rotated, to start the engine 1200. When the engine is started, the depressing force applied to the kick pedal 29 may be weakened. At this time, the sector helical gear 91 is reversed by the return springs 92 and 93, so that the engagement between the drive dog gear 90 and the driven dog gear 86 is released.

Next, the feed system of lubricating oil will be described with reference to Fig. 8. An oil feeding portion is provided under the crank chamber 9. A pipe line 148 for introducing oil is formed in an oil pan 147, and oil is sucked from the pipe line 148 into a trochoidal pump 149 as shown by an arrow D1. The oil thus sucked in the trochoidal pump 149 is compressed and discharged into a pipe line 150, passing through the pipe line 150 as shown by arrows D2 and D3, and is discharged into the crank chamber.

A gear 152 is connected to a pump shaft 151 of the trochoidal pump 149, and the gear 61 connected to the crank shaft 12 is meshed with the gear 152. That is to say, the trochoidal pump 149 is driven by rotation of the crank shaft 12, to circulate the lubricating oil.

As described above, in this embodiment, the sprocket 59 for driving the cam shaft 69 and the gear 61 for driving the oil pump are mounted on the crank shaft 12 adjacently to the bearing 11 for supporting the crank shaft 12; and the inner rotor 15 containing the permanent magnet 19 is disposed at a position near the sprocket 59 and the gear 61, that is, at a position being not apart from the bearing 11. In particular, the governor weight 55 of the governor mechanism for automatically switching the start-up of the engine and the power-generation from each other is disposed in the vicinity of the bearing 11.

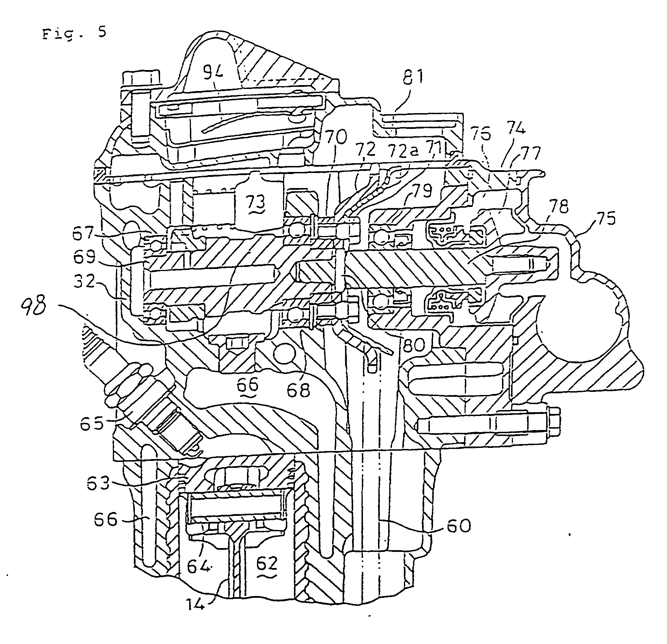

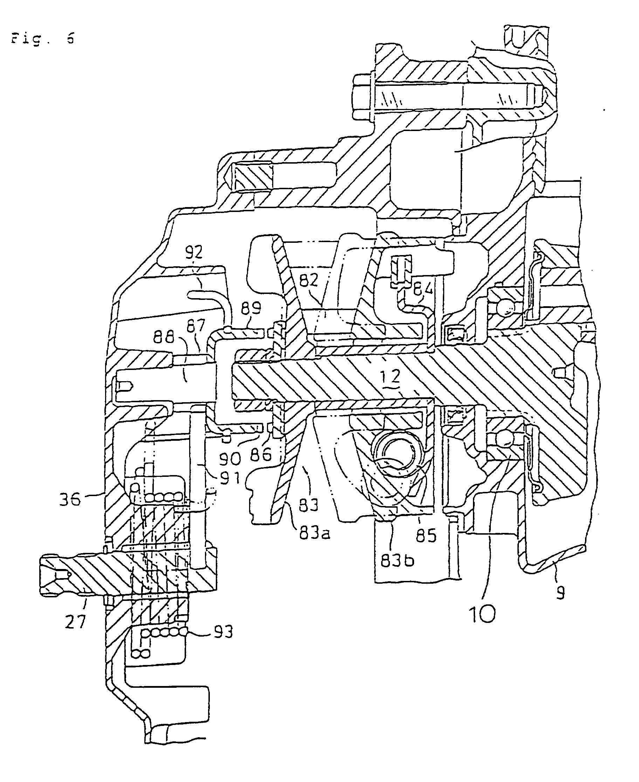

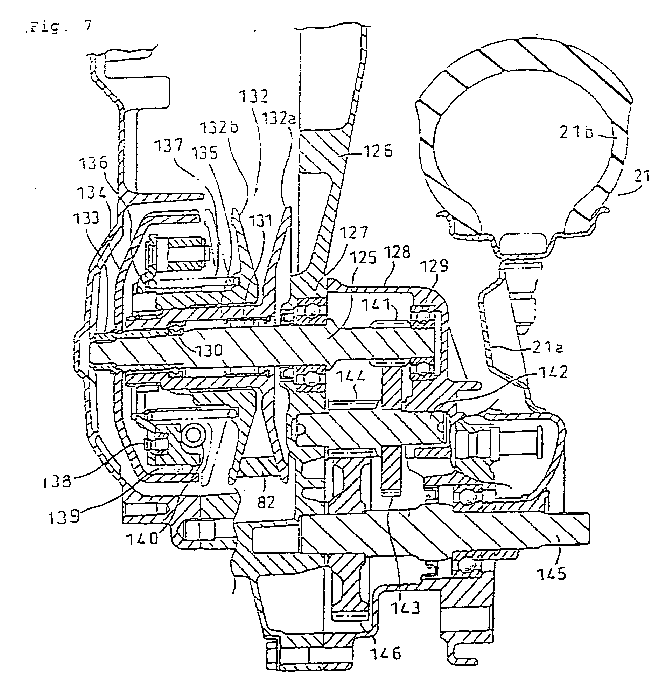

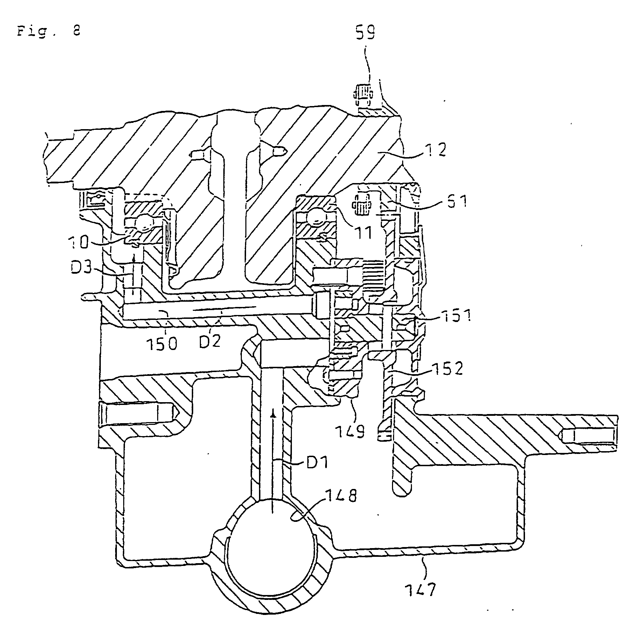

Next, the arrangement of the sensor for outputting a crank pulse will be described. Figs. 9 and 10 are a sectional side view and a sectional front view of the crank shaft and its neighborhood, showing the arrangement of the sensor (crank pulser) for generating a crank pulse, respectively.

Referring to Figs. 9 and 10, the crank case is composed of a front crank case 99F and a rear crank case 99R. A crank pulser 153 is provided on the rear crank case 99R side in such a manner as to be perpendicular to the crank shaft 12. A detecting end 153a of the crank pulser 153 is disposed in such a manner as to face to the outer peripheral edge of a left crank web 12L. A projection, that is, a reluctor 154 is formed on the outer periphery of the left crank web 12L. The crank pulser 153 is magnetically coupled with the reluctor 154, to output a detection signal of a crank angle.

An automatic engine stoppage/start-up control system will be described below. The system includes an idling permitting mode (hereinafter, referred to as "engine-starting and idle switch (SW) mode"), and an idling restricting (or prohibiting) mode (hereinafter, referred to as "engine-stopping and vehicle-starting mode").

Under the "engine-starting and idle switch (SW) mode" which permits idling, idling is temporarily permitted after the initial start-up of the engine after turning on a main power source for performing warm-up operation upon start-up of the engine; and further idling is permitted in accordance with the intention of the driver, that is, by turning on the idle switch (SW) even in the case other than the above mentioned idling after the initial start-up of the engine.

Under the "engine-stopping and vehicle-starting mode" which restricts idling, when the vehicle is stopped, the engine is automatically stopped, and when the accelerator is operated in the vehicle stoppage state, the engine is automatically restarted, enabling the vehicle to start.

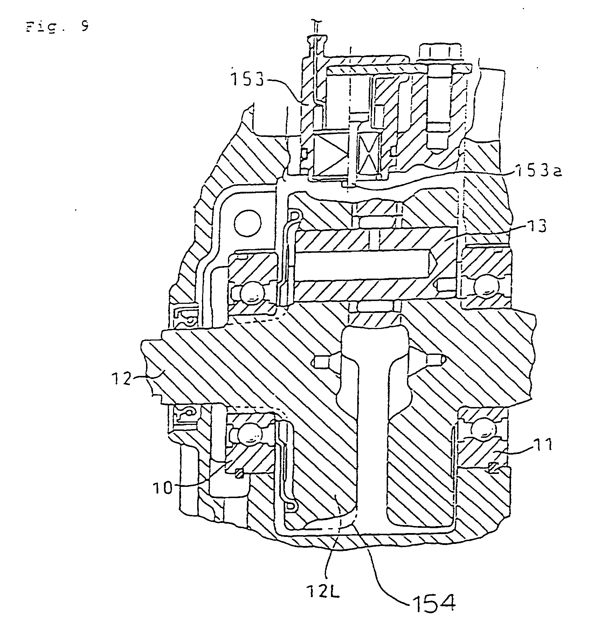

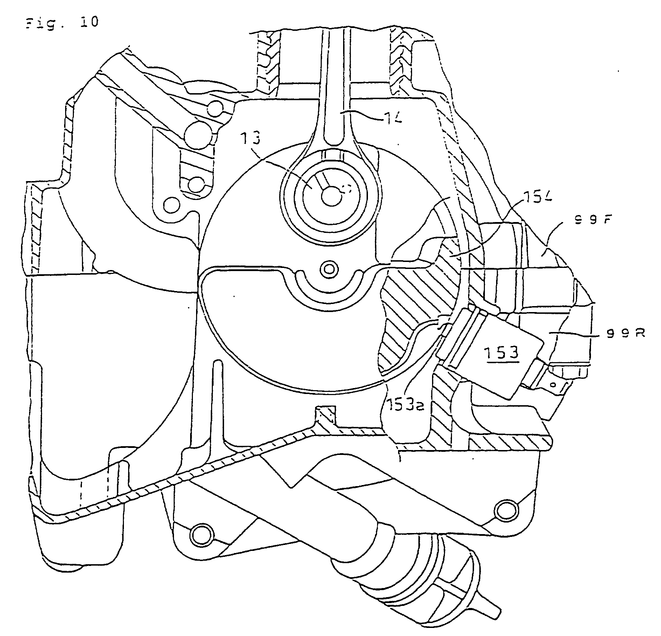

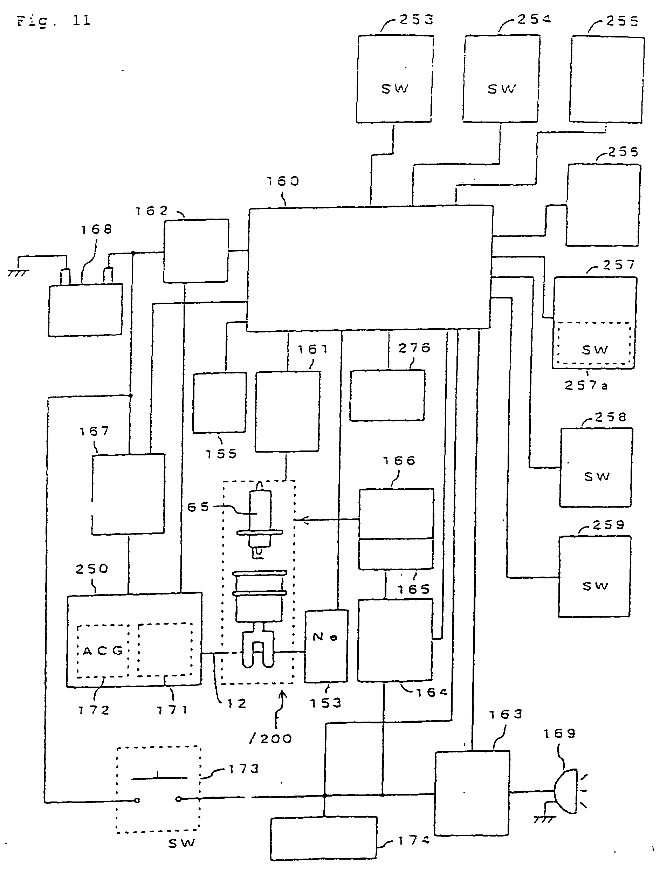

Fig. 11 is a block diagram showing the entire configuration of a start-up/stoppage control system of the engine 1200. In the figure, parts corresponding to those described above are designated by the same characters.

A starter/generator 250 provided coaxially with the crank shaft 12 includes a starter motor 171 and an AC generator (ACG) 172. A power generated by the ACG 172 is charged in a battery 168 via a regulator rectifier 167. The regulator rectifier 167 controls the voltage outputted from the starter/generator 250 at a value in the range of 12 V to 14.5 V. The battery 168 is used to supply, when a starter relay 162 is conducted, a drive current to the starter motor 171, and to supply a load current to various kinds of general electrical equipment 174, a main control unit 160, and the like via a main switch 173.

The main control unit 160 is connected to an Ne sensor 153, an idle switch 253, a seating switch 254, a vehicular speed sensor 255, a stand-by indicator 256, a throttle sensor 257, a starter switch 258, a stop switch 259, a batcery indicator 276, and a water temperature sensor 251. The Ne sensor 153 detects an engine speed Ne. The idle switch 253 manually permits or restricts idling of the engine 1200. The seating switch 254 closes the contact and outputs a signal of the "H" level when the driver sits on the seat. The vehicular speed sensor 255 detects the vehicular speed. The stand-by indicator 256 flashes in the "engine-stopping and vehicle-starting mode". The throttle sensor 257 (including a throttle switch 257a) detects the throttle opening degree θ. The starter switch 258 drives the starter motor 171 to start the engine 1200. The stop switch 259 outputs a signal of the "H" level in response to braking operation. The battery indicator 276 lights up when the voltage of the battery 168 is reduced to a predetermined value (for example, 10 V) or less to warn the driver of the shortage of the charged amount of power in the battery 168. The water temperature sensor 251 detects the temperature of cooling water for the engine.

The main control unit 160 is also connected co an ignition controller (including an ignition coil) 161, a control terminal of the starter relay 162, a control terminal of a head lamp driver 163, and a control terminal of a by-starter relay 164. The ignition controller 161 ignites the ignition plug 65 in synchronization with rotation of the crank shaft 12. The starter relay 162 supplies a power to the starter motor 171. The head lamp driver 163 supplies a power to the head lamp 169. The by- starter relay 164 supplies a power to a by-starter 165 mounted to a carburetor 166. The head lamp relay 163 is configured as switching elements such as FETs. In this case, there is adopted a so-called chopping control for substantially controlling the voltage applied to the head lamp 169 by interrupting the switching elements in accordance with a specific cycle and a specific duty ratio.

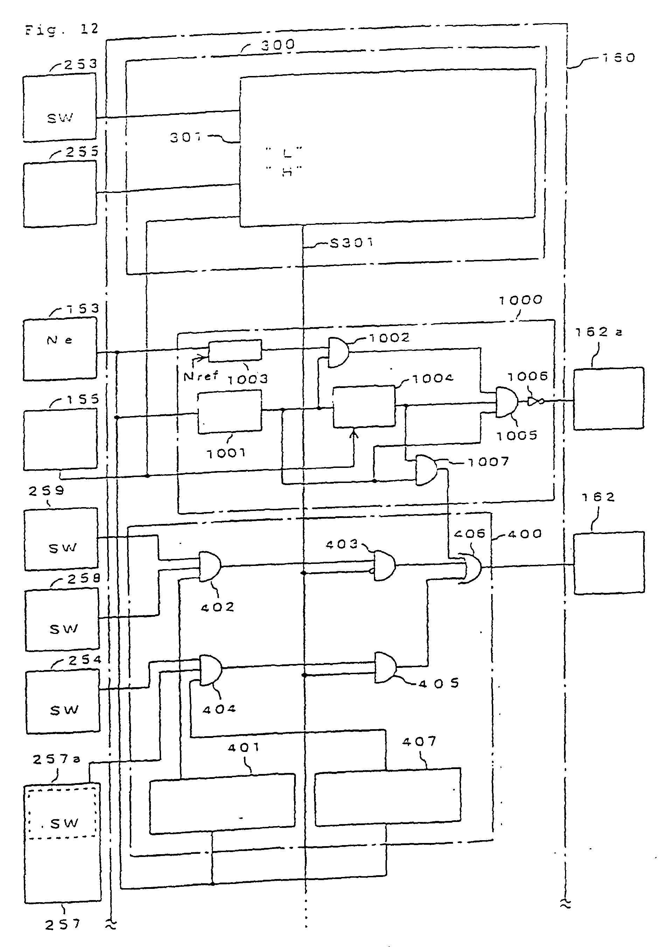

Figs. 12 to 15 are block diagrams (Nos. 1, 2, 3 and 4) each showing the function of the configuration of the main control unit 160. In these figures, the same reference numerals as those described in Fig. 11 designate the same or similar parts.

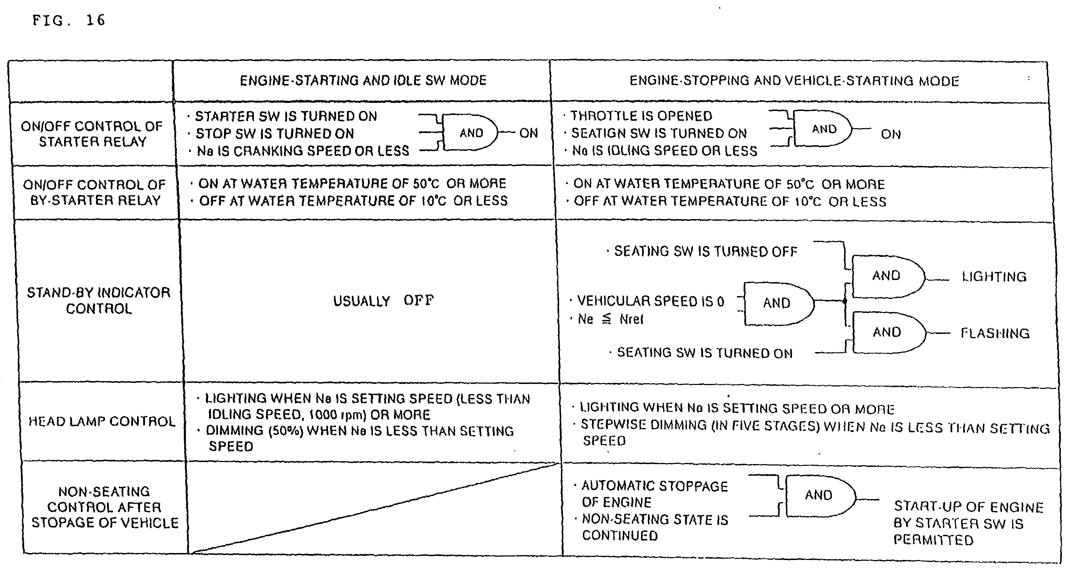

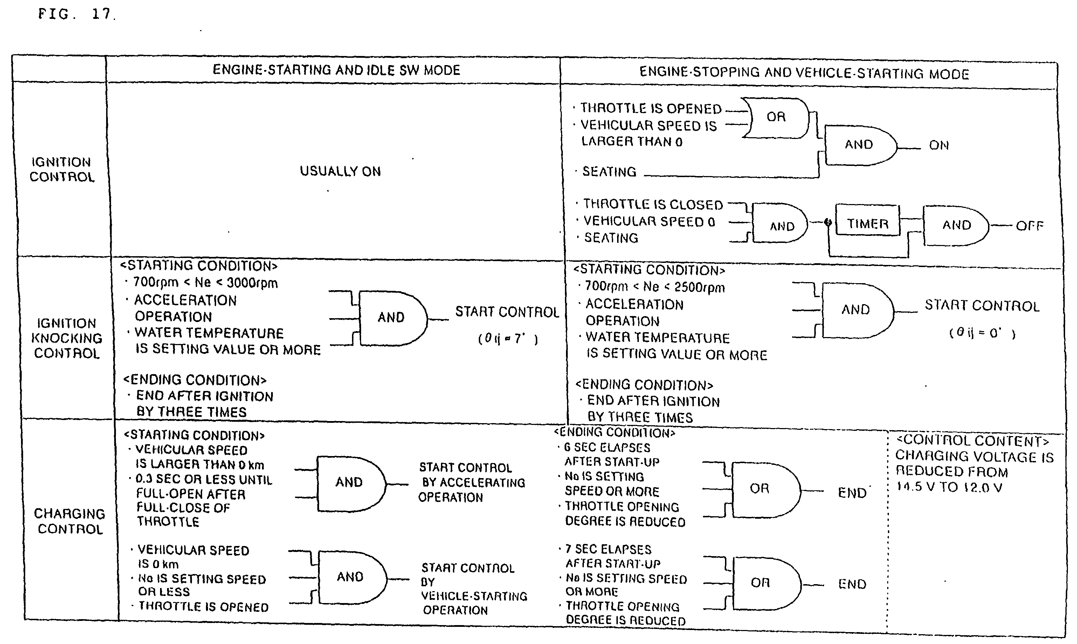

Figs. 16 and 17 show lists of control contents of a starter relay control unit 400, a by-starter control unit 900, a stand-by indicator control unit 600, a head lamp control unit 800, a non-seating (after vehicle stoppage) control unit 100, an ignition control unit 700, an ignition knock control unit 200, and a charging control unit 500. These control units constitute the main control unit 160.

Referring to Fig. 12, when the state of the idling switch 253 and the state of the vehicle are under specific conditions, the operation switching unit 300 switches the operational mode into either the "engine-starting and idle SW mode" or "engine-stopping and vehicle-starting mode".

A signal indicating the state of the idle switch 253 is inputted in an operational mode signal output unit 301 of the operation switching unit 300. The signal indicating the state of the idle switch 253 exhibits the "L" level if the idle switch 253 is turned off (for restricting idling), and exhibits the "H" level if the idle switch 253 is turned on (for permitting idling). The operational mode signal output unit 301 outputs an operational mode signal S₃₀₁ for designating the operational mode of the main control unit 160 at either the "engine-starting and idle SW mode" or "engine-stopping and vehicle-starting mode" in response to output signals from the idle switch 253, vehicular speed sensor 255 and water temperature sensor 155.

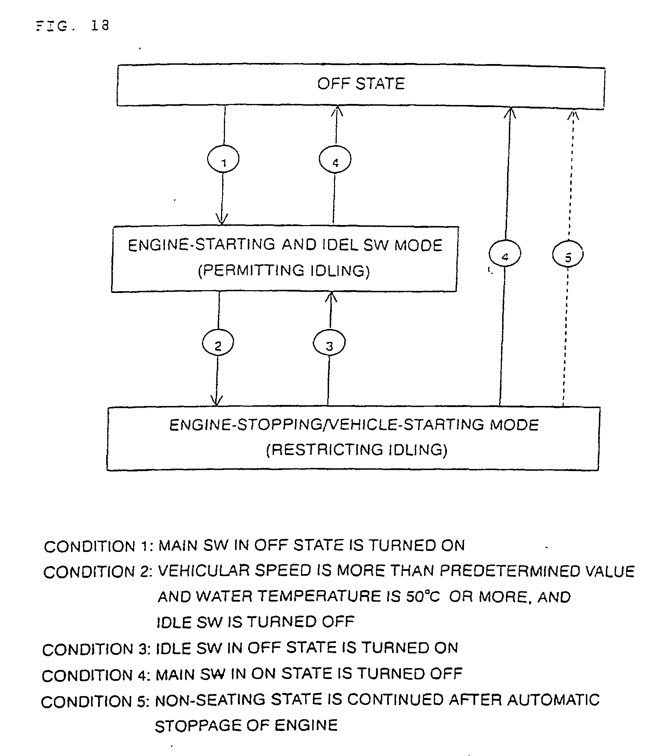

Fig. 18 is a schematic diagram showing conditions for switching the operational modes by the operational mode signal output unit 301. If the main switch 173 is turned on to reset the main control unit 160 (a condition 1 is established), the level of the operational signal S₃₀₁ becomes the "L" level for activating the "engine-starting and idle SW mode".

If, under the "engine-starting and idle SW mode", the vehicular speed not less than a predetermined speed (for example, 10 km/hr) is detected, the water temperature is not less than a specific temperature (for example, a temperature at which the warm-up operation is assumed to have been completed), and the idle switch 253 is turned off (a condition 2 is established), the level of the operational mode signal S₃₀₁ is shifted from the "L" level to the "H" level for activating the "engine-stopping and vehicle-starting mode".

If under the "engine-stopping and vehicle-starting mode", the idle switch SW in the OFF state is turned into ON state (a condition 3 is established), the level of the operational mode signal S₃₀₁ is shifted from the "H" level to the "L" level, to return the operational mode from the "engine-stopping and vehicle-starting mode" into the "engine-starting and idle SW mode". In addition, if the main switch 173 is cut off (a condition 4 is established), the "engine-stopping and vehicle-starting mode" and the "engine-starting and idle SW mode" are both turned off.

Referring back to Fig. 12, a crank angle (upon engine-stoppage) control unit 1000 stops, upon engine stoppage, the engine at a desired crank angle position by reversely rotating the starter motor 171 only for a predetermined time.

A stoppage decision timer 1001 monitors the Ne sensor 153, and outputs a time-out signal ("H" level) when the state in which any signal is not outputted from the Ne sensor 153 is continued for a predetermined time Tx. The time-out signal represents the stoppage of the engine. The time-out signal from the stoppage decision timer 1001 is inputted in an AND circuit 1002, an AND circuit 1007, and a reverse rotation permitting timer 1004.

The reverse rotation permitting timer 1004 keeps a reverse rotation permitting signal at "H" level until an elapse of a time T_{back} in response to the time-out signal from the stoppage decision timer 1002. The reverse rotation permitting time T_{back} is a function of the temperature of cooling water of the engine, and is selected at a shorter timer as the temperature of cooling water becomes higher.

A comparison unit 1003 compares the engine speed Ne based on the output from the Ne sensor 153 with a reference speed Nref set to be larger than a cranking speed but lower than the idling speed. If the engine speed Ne is not less than the reference speed Nref, the comparison unit 1003 outputs a signal of the "L" level indicating that the engine is in the ON state. If the engine speed Ne is less than the reference speed Nref, the comparison unit 1003 outputs a signal of the "H" level indicating that the engine is in the OFF state. The signal from the comparison unit 1003 is inputted in the AND circuit 1002.

The signals outputted from the AND circuit 1002 and the reverse rotation permitting timer 1004, and the time-out signal from the stoppage decision timer 1001 are inputted in an AND circuit 1005. The AND circuit 1005 outputs a logic product of these output signals. The logic product is inverted by an inverter 1006 and is supplied to a reverse rotation relay 162a.

The output signal from the reverse rotation permitting timer 1004 is inputted in one input terminal of an AND circuit 1007, and the time-out signal from the stoppage decision timer 1001 is inputted to the other input terminal of the AND circuit 1007. The signal outputted from the AND circuit 1007 is inputted in the OR circuit 406 of a starter relay control unit 400. It should be noted that the control content of the above-described crank angle (upon engine-stoppage) control unit 1000 has been disclosed in Japanese Patent Laid-open No. Hei 11-117107 by the present applicant, and therefore, the description thereof is omitted.

In accordance with such a crank angle control upon stoppage of the engine, in the case where the engine is started by reversely rotating the crank shaft once and then normally rotating it, the crank shaft is reversely rotated for a specific reverse rotation time previously set in accordance with the rotational friction of the engine. The reverse rotation time is set such that the crank angle position at which the reversely rotated crank shaft is stopped, that is, the normal rotation starting position comes to a position from which the crank shaft can overtake, upon normal rotation, the compression top dead center with a small torque.

Referring to Fig. 12, the starter relay control unit 400 starts the starter relay 162 under a specific condition in accordance with each of the operational modes. The detection signal from the Ne sensor 153 is supplied to a cranking speed-or-less deciding unit 401 and an idling speed-or-less deciding unit 407. If the engine speed is a specific cranking speed (for example, 600 rpm) or less, the cranking speed-or-less deciding unit 401 outputs a signal of the "H" level. If the engine speed is a specific idling speed (for example, 1200 rpm) or less, the idling speed-or-less deciding unit 401 outputs a signal of the "H" level.

An AND circuit 402 outputs a logic product of the signal outputted from the cranking speed-or-less deciding unit 401, the signal indicating the state of the stop switch 259, and the signal indicating the state of the starter switch 258. An AND circuit 404 outputs a logic product of the signal outputted from the idling speed-or-less deciding unit 407, the detection signal from the throttle switch 257a and the signal indicating the state of a seating switch 254. An AND circuit 403 outputs a logic product of the signal outputted from the AND circuit 402 and the reversed signal of the operational mode signal S₃₀₁. An AND circuit 405 outputs a logic product of the signal outputted from the AND circuit 404 and the operational mode signal S₃₀₁. An OR circuit 406 outputs a logic sum of the signals outputted from the AND circuits 403 and 405 to the starter relay 162.

With this starter relay control, under the "engine-starting and idle switch mode", the AND circuit 403 becomes the enable state. As a result, when the engine speed is the cranking speed or less and the stop switch 259 is in the ON state (during braking operation), the starter switch 258 is turned on by the driver (the signal outputted from the AND circuit 402 exhibits the "H" level), and the starter relay 162 is conducted to start the starter motor 171.

Under the "engine-stopping and vehicle-starting mode", the AND circuit 405 becomes the enable state. As a result, if the throttle is opened (the signal outputted from the AND circuit 404 exhibits the "H" level) in the state in which the engine speed is the idling speed or less and the seating switch 254 is in the ON state (during the period in which the driver is sitting on the seat), the starter relay 162 is conducted to start the starter motor 171.

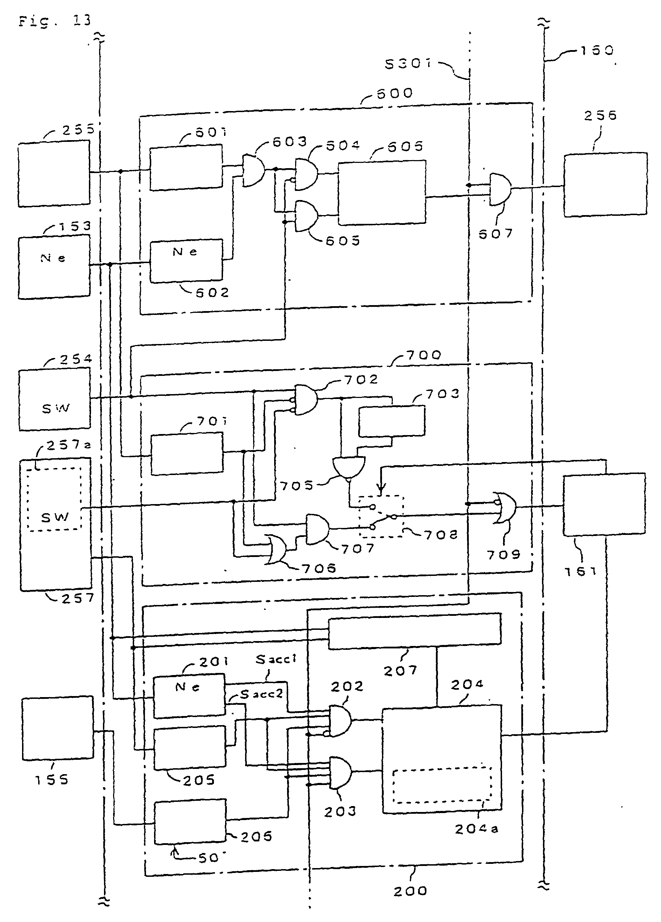

In a stand-by indicator control unit 600 shown in Fig. 13, a vehicular speed-zero deciding unit 601 receives the detection signal from the vehicular speed sensor 255 and outputs, if the vehicular speed is substantially zero, a signal of the "H" level; and an Ne deciding unit 602 receives the detection signal from the Ne sensor 153 and outputs, if the engine speed is a predetermined value or less, a signal of the "H" level. An AND circuit 603 outputs a logic product of the signals outputted from the deciding units 601 and 602.

An AND circuit 604 outputs a logic product of the signal outputted from the AND circuit 603 and the reversed signal of the signal outputted from the seating switch 254. An AND circuit 605 outputs a logic product of the signal outputted from the AND circuit 603 and the signal outputted from the seating switch 254. A lighting/flashing control unit 606 outputs a lighting signal if the signal outputted from the AND circuit 604 exhibits the "H" level, and outputs a flashing signal if it exhibits the "L" level. An AND circuit 607 outputs a logic product of the signal outputted from the lighting/flashing control unit 606 and the operational mode signal S₃₀₁. The stand-by indicator 256 lights in response to the lighting signal and flashes in response to the flashing signal.

With this stand-by indicator control, as shown in Fig. 16, the stand-by indicator 256 lights up if the driver does not sit on the seat when the vehicle is in the stopping state under the "engine-stopping and vehicle-starting mode", and flashes if the driver sits on the seat when the vehicle is in the stopping state under the "engine-stopping and vehicle-starting mode". As a result, when the stand-by indicator 256 flashes, the driver can recognize that he can immediately start the vehicle by opening an accelerator grip, even if the engine is in the stopping state.

The ignition control unit 700 shown in Fig. 13 permits or prohibits the igniting operation by the ignition controller 161 in accordance with a specific condition under each operational mode.

A running deciding unit 701 decides, on the basis of the detection signal from the vehicular speed sensor 255, whether or not the vehicle is in the running state, and outputs, if the vehicle is in the running state, a signal of the "H" level. An OR circuit 706 outputs a logic sum of the signal outputted from the running deciding unit 701 and the signal outputted from the throttle switch 257a. An AND circuit 707 outputs a logic product of the signal outputted from the seating switch 254 and the signal outputted from the OR circuit 706. As a result, the signal outputted from the AND circuit 707 exhibits the "H" level if the throttle is opened or the vehicular speed is larger than zero, and the driver sits on the seat.

The AND circuit 702 outputs a logic product of the signal outputted from the seating switch 254, the reversed signal of the signal outputted from the running deciding unit 701, and the reversed signal of the signal outputted from the throttle switch 257a. A timer 703 retards the input signal by a specific time (three seconds in this embodiment) and outputs the retarded input signal. An NAND circuit 705 outputs the reversed signal of the logic product of the signal outputted from the AND circuit 702 and the signal outputted from the timer 703. As a result, the signal outputted from the NAND circuit 705 exhibits the "L" level if the throttle is closed, the vehicular speed is zero, and the seating state of the driver is continued for three seconds.

A movable contact of a switching circuit 708 is switched to the NAND circuit 705 side when the igniting operation of the ignition controller 161 is carried out and is switched to the AND circuit 707 side when the ignition operation of the ignition controller 161 is stopped. An OR circuit 709 creates a logic sum of the reversed signal of the operational mode signal S₃₀₁ and the reversed signal of the signal outputted from the switching circuit 708, and outputs the logic sum to the ignition controller 161.

The ignition control unit 700 configured as described above usually permits the ignition control under the "engine-starting and idle SW mode" because as shown in Fig. 17, the signal outputted from the OR circuit 709 usually exhibits the "H" level under the "engine-starting and idle SW mode".

On the contrary, under the "engine-stopping and vehicle-starting mode", when the vehicle is stopped and the engine is automatically stopped, the ignition control unit 700 permits the ignition control under a condition that the driver is in the seating state and the throttle is opened, or the vehicular speed is larger than zero. On the other hand, in the case where the vehicle in the running state is stopped, if the seating state of the driver is detected, the ignition control is prohibited and thereby the engine is automatically stopped; however, if the seating state of the driver is not detected, the permission of the ignition control is continued and thereby the engine is not automatically stopped.

Accordingly, if there occurs a failure of the seating switch 254 and thereby it cannot be detected that the driver sits on the seat although he actually sits on the seat, the engine is not automatically stopped, even when the vehicle in the running state is stopped, and accordingly, it is not required to start the engine for starting the vehicle. That is to say, even if there occurs a failure of the seating switch 254 in the system permitting automatic start-up of the engine provided that the driver sits on the seat, there does not occur any hindrance in running the vehicle.

Further, this embodiment is configured such that even if the seating state of the driver is detected when the vehicle in the running state is stopped, the ignition control is not immediately prohibited, but prohibited after an elapse of a specific time (three seconds in this embodiment). Accordingly, upon temporary stoppage of the vehicle at an intersection, or upon making U-turn the vehicle in which the driver is in the seating state, the vehicular speed is substantially zero, and the throttle is nearly full-closed, the starting state of the engine can be continued.

An ignition knocking control unit 200 shown in Fig. 13 prevents occurrence of knocking by retarding the ignition timing upon acceleration more than the ignition timing upon usual rotation according to each operation mode. In particular, according to this embodiment, the retarded amount of the ignition timing upon vehicle-starting acceleration from the engine-stoppage state is larger than the retarded amount of the ignition timing upon usual acceleration from the engine rotating state, whereby occurrence of knocking upon vehicle-starting acceleration, which is inherent to the vehicle on which the automatic engine stoppage/start-up control system is mounted, can be perfectly prevented.

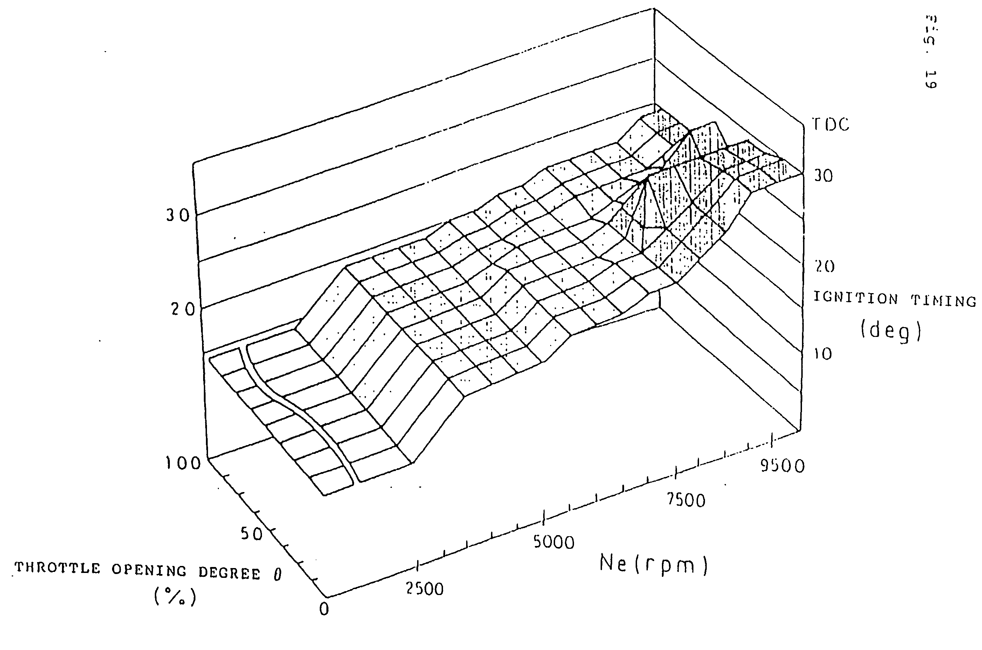

A standard ignition timing represented by a degree of advance angle (deg) from the compression top dead center (TDC) is previously registered, as the function of the engine speed Ne and the throttle opening degree θ, in a standard ignition timing determining unit 207. Fig. 19 is a diagram showing a relationship between the engine speed Ne, throttle opening degree θ, and standard ignition timing according to this embodiment. The standard ignition timing represented by the advance angle deg is taken as 15° (deg) in an engine speed range of 2500 rpm or less, and is gradually increased depending on the engine speed Ne around engine speed of 2500 rpm or over.

If the engine speed Ne is in a range of 700 rpm < Ne < 3000 rpm, an Ne deciding unit 201 outputs a usual acceleration signal S_{acc1} of the "H" level, and if the engine speed Ne is in a range of 700 rpm < Ne < 2500 rpm, the Ne deciding unit 201 outputs a vehicle-starting acceleration signal S_{acc2} of the "H" level. In addition, the lower limit (700 rpm in this embodiment) of the engine speed Ne upon generation of the engine-starting acceleration signal S_{acc2} may be desirably set at the cranking speed of the engine.

If a rate of change Δ θ of the throttle opening degree θ detected by the throttle sensor 257 exceeds a specific value, an acceleration deciding unit 205 decides that the accelerating operation has been performed and outputs an acceleration detecting signal of the "H" level. A water temperature deciding unit 206 decides the temperature of engine cooling water on the basis of the detection signal from the waster temperature sensor 155, and outputs a signal of the "H" level if the water temperature exceeds a specific temperature (50°C in this embodiment).

An AND circuit 202 outputs a logic product of the usual acceleration signal S_{acc1}, acceleration detection signal, water temperature decision signal, and reversed signal of the operational mode signal S₃₀₁. An AND circuit 203 outputs a logic product of the vehicle-starting acceleration signal S_{acc2}, acceleration detection signal, water temperature decision signal, and operational mode signal S₃₀₁.

If the outputs from the AND circuits 202 and 203 each exhibit the "L" level, that is, if the vehicle is not in the acceleration state, an ignition timing (upon acceleration) correcting unit 204 supplies the standard ignition timing determined by the standard ignition timing determining unit 207 (see Fig. 19) to the ignition controller 161. The ignition controller 161 carries out the ignition operation with the ignition timing supplied from the ignition timing (upon acceleration) correcting unit 204.

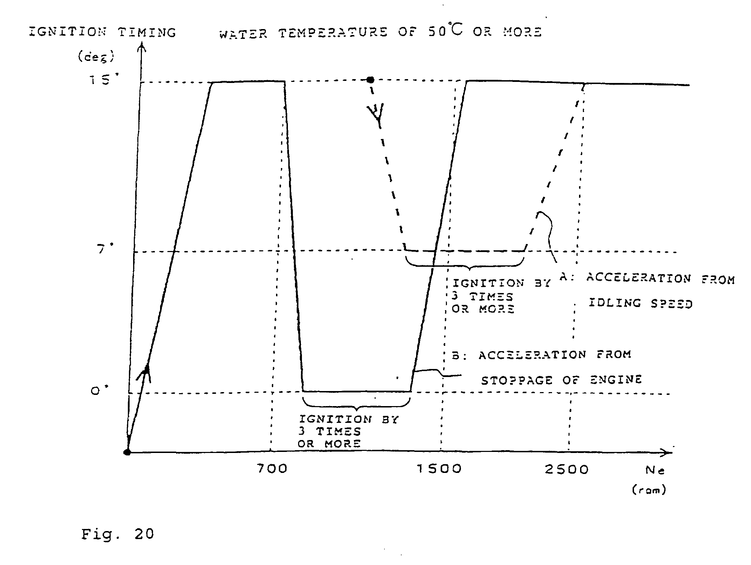

If the signal outputted from the AND circuit 202 exhibits the "H" level, that is, if under the "engine-starting and idle SW mode" shown in Fig. 17, the engine speed Ne is in the range of 700 rpm < Ne < 3000 rpm, the accelerating operation is performed by the driver, and the water temperature exceeds the specific value (50°C in this embodiment), the ignition timing represented by the advance angle is retarded up to 7° irrespective of the result determined by the standard ignition timing determining unit 207 as shown by a broken line A in Fig. 20.

If the signal outputted from the AND circuit 203 exhibits the "H" level, that is, if under the "engine-stopping and vehicle-starting mode" shown in Fig. 17, the engine speed Ne is in the range of 700 rpm < Ne < 2500 rpm, the accelerating operation is performed by the driver, and the water temperature exceeds the specific value, the ignition timing represented by the advance angle is retarded up to 0° irrespective of the result determined by the standard ignition timing determining unit 207 as shown by a solid line B in Fig. 20.

The ignition timing (upon acceleration) correcting unit 204 has a counter 204a. If either of the signals outputted from the AND circuits 202 and 203 exhibits the "H" level, the above-described retarded ignition is immediately carried out by a specific number of times (three times in this embodiment) by means of the ignition timing (upon acceleration) correcting unit 204, and then the retarded ignition is immediately returned to the usual ignition timing determined by the standard ignition timing determining unit 207.

According to the ignition knocking control, it is possible to make the retarded amount upon vehicle-starting acceleration different from the retarded amount upon usual acceleration from an intermediate rotational region. To be more specific, by setting the retarded amount upon vehicle-starting acceleration larger than the retarded amount upon usual acceleration from the intermediate rotational region, it is possible to prevent occurrence of knocking not only upon the usual acceleration from the intermediate rotational region but also upon vehicle-starting acceleration.

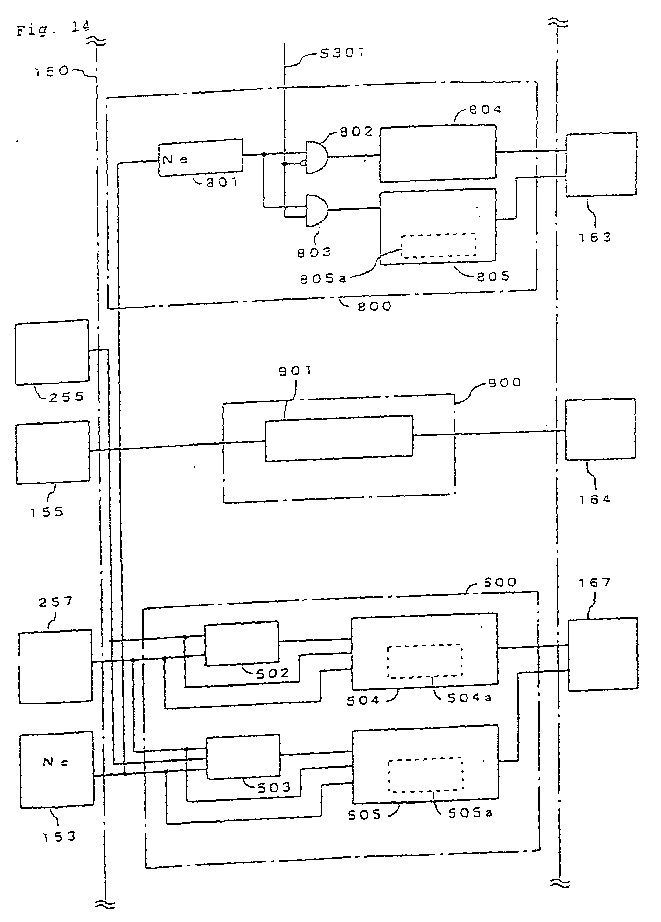

In the head lamp control unit 800 shown in Fig. 14, an Ne deciding unit 801 decides, on the basis of the defection signal from the Ne sensor 153, whether or not the engine speed is a specific setting speed (less than the idling speed) or more. If the engine speed is the setting speed or more, the Ne deciding unit 801 outputs a signal of the "H" level. An AND circuit 802 outputs a logic product of the signal outputted from the Ne deciding unit 801 and the reversed signal of the operational mode signal S₃₀₁. An AND circuit 803 outputs a logic product of the signal outputted from the Ne deciding unit 801 and the operational mode signal S₃₀₁.

If the signal outputted from the AND circuit 802 exhibits the "H" level, a lighting/dimming switching unit 804 outputs a signal of the "H" level, and if the signal outputted from the AND circuit 802 exhibits the "L" level, the lighting/dimming switching unit 804 outputs a pulse signal of the duty ratio of 50%. If the signal outputted from the AND circuit 803 exhibits the "H" level, a lighting/multi-stage dimming switching unit 805 outputs a signal of the "H" level, and if the signal outputted from the AND circuit 803 exhibits the "L" level, a timer 805a counts the continuation time of the outputted signal and the lighting/multi-stage dimming switching unit 805 outputs a pulse signal with its duty ratio gradually reduced depending on the continuation time of the outputted signal. In this embodiment, the duty ratio is stepwise reduced by each 0.5 to 1 second from 95% to 50%. With such a stepwise dimming manner, since the quantity of light is instantly, linearly reduced, it is possible to achieve the power-saving and ensure a high commercial value.

According to such a head lamp control, as shown in Fig. 16, the head lamp is lighted or dimmed the light depending on the engine speed Ne under the "engine-starting and idle SW mode", and is lighted and stepwise dimmed depending on the engine speed Ne under the "engine-stopping and vehicle-starting mode". Accordingly, it is possible to suppress the discharge of the battery upon vehicle stoppage while sufficiently keeping the visibility from a vehicle running in the opposed direction. As a result, the amount of power in a battery charged by a generator upon starting vehicle is decreased later on and the electronic load of the generator is reduced, thereby enhancing the acceleration performance upon starting of vehicle.

In the by-starter control unit 900 shown in Fig. 14, the detection signal from the water temperature sensor 155 is inputted in a water temperature deciding unit 901. If the water temperature is a first predetermined value (50°C in this embodiment) or more, the water temperature deciding unit 901 outputs a signal of the "H" level to close the by-starter relay 164, and if the water temperature is a second predetermined value (10°C in this embodiment) or less, the water temperature deciding unit 901 outputs a signal of the "L" level to open the by-starter relay 164.

According to such a by-starter control, as the water temperature becomes higher, the fuel becomes denser, and as the water temperature becomes lower, the fuel automatically becomes thinner. In this embodiment, the opening/closing temperature of the by-starter relay 164 employs hysteresis, so that it is possible to prevent an unnecessary opening/closing operation of the by-starter relay 164 which may be caused near a critical temperature.

In a charging control unit 500 shown in Fig. 14, the detection signal from the vehicular speed sensor 255 and the detection signal from the throttle sensor 257 are inputted in an acceleration operation detecting unit 502. As shown in Fig. 17, if the vehicular speed is larger than zero and the throttle is changed from the full-closed state to the full-opened state for 0.3 second or less, the acceleration detecting unit 502 decides that the acceleration is performed, and outputs an acceleration detecting pulse.

A charging (upon acceleration) restricting unit 504 controls a regulator rectifier 167 in response to the acceleration detecting pulse signal to reduce a charging voltage of the battery 168 from a usual voltage, that is, 14.5 V to 12.0 V.

The charging (upon acceleration) restricting unit 504 starts a six-second timer 504a in response to the acceleration detecting pulse. If the timer 504a times out; the engine speed Ne becomes the setting speed or more; or the throttle opening degree is reduced, the charging restriction is released to return the charging voltage from 12.0 V to 14.5 V.

The detection signals from the vehicular speed sensor 255, the Ne sensor 153, and the throttle sensor 257 are inputted in the vehicle-starting operation detecting unit 503. As shown in Fig. 17, if the vehicular speed is zero and the throttle is opened when the engine speed Ne is the setting speed (2500 rpm in this embodiment) or less, the vehicle-starting operation detecting unit 503 decides that the vehicle-starting operation is performed, and outputs a vehicle-starting operation detecting pulse.

When detecting the vehicle-starting operation detecting pulse signal, a charging (upon vehicle start-up) restricting unit 505 controls the regulator rectifier 167 to reduce the charging voltage of the battery 168 from the usual voltage, that is, 14.5 V to 12.0 V.

The charging (upon vehicle start-up) restricting unit 505 starts a seven-second timer 505a in response to the vehicle-starting operation detecting pulse. If the timer 505a times out; the engine speed Ne becomes the setting speed or more; or the throttle opening degree is reduced, the charging restriction is released to return the charging voltage from 12.0 V to 14.5 V.

According to such charging control, when the throttle is rapidly opened by the driver to effect rapid acceleration or starting the vehicle in the stoppage state, the charging voltage is suppressed at low to temporarily reduce the electric load of the starter/generator 250. Accordingly, it is possible to reduce the mechanical load of the engine 1200 applied from the starter/generator 250 and hence to improve the accelerating performance.

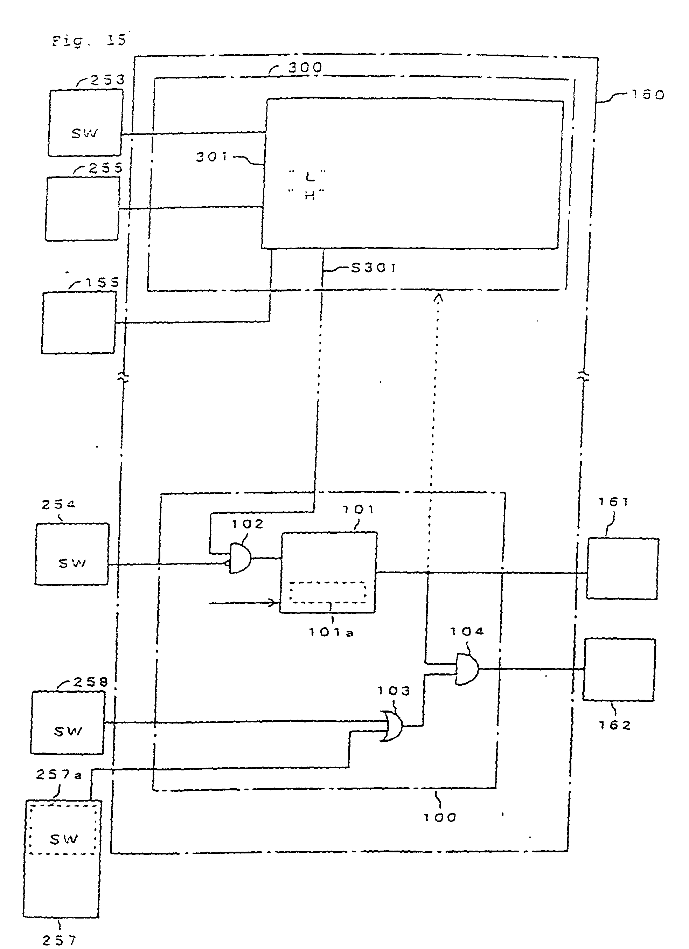

The non-seating (after vehicle stoppage) control unit 100 shown in Fig. 15 exceptionally permits, the start-up of the engine by the starter switch 258 which is basically prohibited, with a timing where the driver can experimentally start the engine by the starter switch.

An AND circuit 102 outputs a logic product of the operational mode signal S₃₀₁ and the reversed signal of the signal from a seating switch 254. A non-seating continuation deciding unit 101 has a timer 101a and detects, after automatic stoppage of the engine, the "H" level of the signal from the AND circuit 102 for a specific time or more. To be more specific, if under the "engine-stopping and vehicle-starting mode", the non-seating state of the driver is continued for a specific time or more after automatic stoppage of the engine, the level of the signal outputted from the AND circuit 102 is set at the "H" level. As a result, the ignition controller 161 is energized to be in the ignition permissible state.

An OR circuit 103 outputs a logic sum of the signals outputted from the starter switch 258 and the throttle switch 257a. An AND circuit 104 creates a logic product of the signals outputted from the non-seating continuation deciding unit 101 and the OR circuit 103, and outputs it to the starter relay 162. To be more specific, if the starter switch 258 is turned on or the throttle is opened after the non-seating state of the driver is continued for the specific time or more after the automatic stoppage of the engine under the "engine-stopping and vehicle-starting mode" (the signal outputted from the non-seating continuation deciding unit 101 exhibits the "H" level), the starter relay 162 is energized to drive the starter motor 171. At this time, since the ignition controller 161 is energized by the non-seating continuation deciding unit 101, the start-up of the engine can be performed.

According to such non-seating control after stoppage of the vehicle, even after the engine is stopped in response to the specific vehicle-stoppage condition, the start-up of the engine is exceptionally permitted by the starter switch 258 if it is detected that the non-seating state of the driver is continued for the specific time. Accordingly, if the driver leaves, after automatic stoppage of the engine upon stoppage of the vehicle, the vehicle without cutting-off the main power source and when the driver comes back to the vehicle afterwards, forgetting that the engine is under the automatic stoppage control and operates the starter switch 258, she/he can still start the engine in the same manner as that in the usual state in which the engine is not under the automatic stoppage control.

In the above-described non-seating control after stoppage of the vehicle, the start-up of the engine by the starter switch 258 is exceptionally permitted under the condition that the non-seating state of the driver is continued for the specific time or more after automatic stoppage of the engine in the "engine-stopping and vehicle-starting mode"; however, as shown by a broken line in Fig. 15, the start-up of the engine by the starter switch 258 may be permitted by controlling the operation switching unit 300 to switch the operational mode from the "engine-stopping and vehicle-starting mode" to the "engine-starting and idle SW mode". Alternatively, as shown by the "condition 5" in Fig. 18, the start-up of the engine by the starter switch 258 may be substantially permitted by cutting off the main switch 173.

The invention provides an engine stoppage/start-up control system permitting, the start-up of the engine by a starter switch, with a timing where the driver can experimentally start the engine by the starter switch. To achieve this, under the "engine-stopping and vehicle-starting mode" in which an engine is stopped, when a vehicle in the running state is stopped, in response to a specific vehicle-stopping condition and is restarted, after stoppage of the engine, in response to a specific vehicle-starting operation, the start-up of the engine by turning on a starter switch is exceptionally permitted if the non-seating state of a driver is continued for a specific time or more after the engine is automatically stopped.

### INSCRIPTION OF THE DRAWINGS

### FIG. 11

- 153:: Ne SENSOR
- 155:: WATER TEMPERATURE SENSOR
- 253:: IDLE SW
- 254:: SEATING SW
- 255:: VEHICULAR SPEED SENSOR
- 256:: STAND-BY INDICATOR
- 257:: THROTTLE SENSOR
- 257a:: THROTTLE SW
- 258:: STARTER SW
- 259:: STOP SW
- 160:: MAIN CONTROL UNIT
- 161:: IGNITION CONTROLLER
- 162:: STARTER RELAY
- 163:: HEAD LAMP DRIVER
- 164:: BY STARTER RELAY
- 165:: BY STARTER
- 166:: CARBURETOR
- 167:: REGULATOR RECTIFIER
- 168:: BATTERY
- 171:: STARTER MOTOR
- 172:: ACG
- 173:: MAIN SW
- 174:: GENERAL ELECTRICAL EQUIPMENT
- 276:: BATTERY INDICATOR
- 250:: STARTER/GENERATOR

### FIG. 12

- 253:: IDLE SW
- 255:: VEHICULAR SPEED SENSOR
- 153:: Ne SENSOR
- 155:: WATER TEMPERATURE SENSOR
- 259:: STOP SW
- 258:: STARTER SW
- 254:: SEATING SW
- 257:: THROTTLE SENSOR
- 257a:: THROTTLE SW
- 162:: STARTER RELAY
- 162a:: REVERSE ROTATION RELAY
- 300:: OPERATION SWITCHING UNIT
- 301:: OPERATIONAL MODE SIGNAL OUTPUT UNIT
- "L":: ENGINE-STARTING AND IDEL SW MODE
- "H":: ENGINE-STOPPING AND VEHICLE-STARTING MODE
- 1000:: CRANK ANGLE (UPON ENGINE-STOPPAGE) CONTROL UNIT
- 1001:: STOPPAGE DECIDING UNIT
- 1003:: COMPARISON UNIT
- 1004:: REVERSE ROTATION PERMITTING TIMER
- 400:: STARTER RELAY CONTROL UNIT
- 401:: CRANKING SPEED-OR-LESS DECIDING UNIT
- 407:: IDLING SPEED-OR-LESS DECIDING UNIT

### FIG. 13

- 255:: VEHICULAR SPEED SENSOR
- 153:: Ne SENSOR
- 254:: SEATING SW
- 257:: THROTTLE SENSOR
- 257a:: THROTTLE SW
- 155:: WATER TEMPERATURE SENSOR
- 256:: STAND-BY INDICATOR
- 161:: IGNITION CONTROLLER
- 600:: STAND-BY INDICATOR CONTROL UNIT
- 601:: VEHICULAR SPEED-ZERO DECIDING UNIT
- 602:: Ne DECIDING UNIT
- 606 :: LIGHTING/DIMMING CONTROL UNIT
- 700:: IGNITION CONTROL UNIT
- 701:: RUNNING DECIDING UNIT
- 703:: TIMER
- 200:: IGNITION KNOCKING CONTROL UNIT
- 201:: Ne DECIDING UNIT
- 204:: IGNITION TIMING (UPON ACCELERATION) CORRECTING UNIT
- 204a:: COUNTER
- 205:: ACCELERATION DECIDING UNIT
- 206:: WATER TEMPERTAURE DECIDING UNIT
- 207:: STANDARD IGNITION TIMING DETERMINING UNIT

### FIG. 14

- 255:: VEHICULAR SPEED SENSOR
- 155:: WATER TEMPERTAURE SENSOR
- 257:: THROTTLE SENSOR
- 153:: Ne SENSOR
- 163:: HEAD LAMP DRIVER
- 164:: BY-STARTER RELAY
- 167:: REGULATOR RECTIFIER
- 800:: HEAD LAMP CONTROL UNIT
- 801:: Ne DECIDING UNIT
- 804:: LIGHTING/DIMMING SWITCHING UNIT
- 805:: LIGHTING/MULTI-STAGE DIMMING SWITCHING UNIT
- 805a:: TIMER
- 900:: BY-STARTER CONTROL UNIT
- 901:: WATER TEMPARTURE DECIDING UNIT
- 500:: CHARGING CONTROL UNIT
- 502:: ACCELERATION DETECTING UNIT
- 503:: VEHICLE-STARTING OPERATION DETECITNG UNIT
- 504:: CHARGING (UPON ACCELERATION) RESTRICTING UNIT
- 504a:: TIMER
- 505:: CHARGING (UPON VEHICLE START-UP) RESTRICITNG UNIT
- 505a:: TIMER

### FIG. 15

- 253:: IDLE SW
- 255:: VEHICULAR SPEED SENSOR
- 155:: WATER TEMPERATURE SENSOR
- 254:: SEATING SW
- 258:: STARTER SW
- 257:: THROTTLE SENSOR
- 257a:: THROTTLE SW
- 161:: IGNITION CONTROLLER
- 162:: STARTER RELAY
- 300:: OPERATION SWITCHING UNIT
- 301:: OPERATIONAL MODE SIGNAL OUTPUT UNIT
- "L":: ENGINE-STARTING AND IDEL SW MODE
- "H^{"}:: ENGINE-STOPPING AND VEHICLE-STARTING MODE
- 100:: NON-SEATING (AFTER VEHICLE STOPPAGE) CONTROL UNIT
- 101:: NON-SEATIGN CONTINUATION DECIDING UNIT
- 101a:: TIMER

### STOPAGE OF ENGINE

### FIG. 16

- 1:: ENGINE-STARTING AND IDLE SW MODE
- 2:: ENGINE-STOPPING AND VEHICLE-STARTING MODE
- 3:: ON/OFF CONTROL OF STARTER RELAY
- 4:: STARTER SW IS TURNED ON
- 5:: STOP SW IS TURNED ON
- 6:: Ne IS CRANKING SPEED OR LESS
- 7:: ON
- 8:: THROTTLE IS OPENED
- 9:: SEATIGN SW IS TURNED ON
- 10:: Ne IS IDLING SPEED OR LESS
- 11:: ON
- 12:: ON/OFF CONTROL OF BY-STARTER RELAY
- 13:: ON AT WATER TEMPERATURE OF 50°C OR MORE
- 14:: OFF AT WATER TEMPERATURE OF 10°C OR LESS
- 15:: ON AT WATER TEMPERATURE OF 50°C OR MORE
- 16:: OFF AT WATER TEMPERATURE OF 10°C OR LESS
- 17:: STAND-BY INDICATOR CONTROL
- 18:: USUALLY ON
- 19:: SEATING SW IS TURNED OFF
- 20:: LIGHTING
- 21:: VEHICULAR SPEED IS ZERO
- 22:: SEATING SW IS TURNED ON
- 23:: FLASHING
- 24 :: HEAD LAMP CONTROL
- 25:: LIGHTING WHEN Ne IS SETTING SPEED (LESS THAN IDLING SPEED, 1000 rpm) OR MORE
- 26:: DIMMING WHEN Ne IS LESS THAN SETTING SPEED
- 27:: LIGHTING WHEN Ne IS SETTING SPEED OR MORE
- 28 :: STEPWISE DIMMING (IN FIVE STAGES) WHEN Ne IS LESS THAN SETTING SPEED
- 29:: NON-SEATING CONTROL AFTER STOPAGE OF VEHICLE
- 30:: AUTOMATIC STOPPAGE OF ENGINE
- 31:: NON-SEATING STATE IS CONTINUED
- 32:: START-UP OF ENGINE BY STARTER SW IS PERMITTED

### FIG. 17

- 1:: ENGINE-STARTING AND IDLE SW MODE
- 2:: ENGINE-STARTING AND VEHICLE-STARTING MODE
- 3:: IGNITION CONTROL
- 4:: USUALLY ON
- 5:: THROTTLE IS OPENED
- 6:: VEHICULAR SPEED IS LARGER THAN ZERO
- 7:: SEATING
- 8:: ON
- 9:: THROTTLE IS CLOSED
- 10:: VEHICULAR SPEED IS ZERO
- 11:: SEATING
- 12:: TIMER
- 13:: OFF
- 14:: IGNITION KNOCKING CONTROL
- 15:: <STARTING CONDITION>
- 16:: ACCELERATION OPERATION
- 17:: WATER TEMPERATURE IS SETTING VALUE OR MORE
- 18:: START CONTROL
- 19:: <ENDING CONDITION>
- 20:: ENDING AFTER IGNITION BY THREE TIMES
- 21:: <STARTING CONDITION>
- 22:: ACCELERATION OPERATION
- 23:: WATER TEMPERATURE IS SETTING VALUE OR MORE
- 24:: START CONTROL
- 25:: <ENDING CONDITION>
- 26:: ENDING AFTER IGNITION BY THREE TIMES
- 27:: CHARGING CONTROL
- 28:: <STARTING CONDITION>
- 29:: VEHICULAR SPEED IS LARGER THAN O km
- 30,: 31: 0.3 SEC OR LESS UNTIL FULL-OPEN AFTER FULL-CLOSE
- OF: THROTTLE
- 32:: START CONTROL BY ACCELERATING OPERATION
- 33:: VEHICULAR SPEED IS 0 km
- 34:: Ne IS SETTING SPEED OR LESS
- 35:: THROTTLE IS OPENED
- 36:: START CONTROL BY VEHICLE-STARTING OPERATION
- 37:: <ENDING CONDITION>
- 38:: 6 SEC ELAPSES AFTER START-UP
- 39:: Ne IS SETTING SPEED OR MORE
- 40:: THROTTLE OPENING DEGREE IS REDUCED
- 41:: ENDING
- 42: 7: SEC ELAPSES AFTER START-UP
- 43:: Ne IS SETTING SPEED OR MORE
- 44:: THROTTLE OPENING DEGREE IS REDUCED
- 45:: ENDING
- 46:: <CONTROL CONTENT>
- 47:: CHARGING VOLTAGE IS REDUCED FROM 14.5 V TO 12.0 V

## Claims

1. An automatic engine stoppage/start-up control system for stopping, in the case of stopping a vehicle in the running state, an engine (1200) in response to a specific vehicle-stopping condition, and restarting, after stoppage of the engine, the engine in response to an accelerator operation, wherein said control system comprises:
a starter switch (258) for starting the engine;
starter control means (160) for prohibiting the start-up of the engine by said starter switch (258) after the engine is stopped in response to said specific vehicle-stopping condition; **characterized by**
seating detecting means (254) for detecting the seating state of a driver; and
first non-seating state after vehicle-stoppage control means (300) for exceptionally permitting the start-up of the engine by said starter switch (258) if it is detected by said seating detecting means (254) that the non-seating state of the driver is continued for a specific time after the engine is stopped in response to said specific vehicle-stopping condition.

2. An automatic engine stoppage/start-up control system according to claim 1, comprising second non-seating state after vehicle-stoppage control means for cutting off a main power source (168) if it is detected by said seating detecting means (254) that the non-seating state of the driver is continued for a specific time after the engine is stopped in response to said specific vehicle-stopping condition.

3. An automatic engine stoppage/start-up control system according to claim 1, wherein said first non-seating state after vehicle-stoppage control means (300) permits both the start-up of the engine by said starter switch (258) and the start-up of the engine performed in response to said accelerator operation if it is detected by said seating detecting means (254) that the non-seating state of the driver is continued for said specific time after the engine is stopped in response to said specific vehicle-stopping condition.

4. An automatic engine stoppage/start-up control system according to claim 1, including a first operational mode which permits the start-up of the engine (1200) by said starter switch (258) and idling; and a second operational mode which restricts the start-up of the engine by said starter switch (258) and idling and stops, in the case of stopping a vehicle in the running state, the engine in response to said specific vehicle-stopping condition, and restarts, after stoppage of the engine, the engine in response to an accelerator operation, and
operation switching means (300) for switching the operational mode from said second operational mode to said first operational mode when the non-seating state of the driver detected by said seating detecting means (254) is continued for said specific time after the engine is stopped in response to said specific vehicle-stopping condition.

## Patentansprüche

1. Automatisches Maschinenstopp/Start-Steuersystem zum Stoppen einer Maschine (1200) in Reaktion auf eine spezifische Fahrzeugstoppbedingung im Fall des Stoppens eines Fahrzeugs im Fahrzustand, und zum erneuten Starten der Maschine in Reaktion auf eine Fahrgriffoperation nach dem Stoppen der Maschine, wobei das Steuersystem umfasst:
einen Starterschalter (258) zum Starten der Maschine;
ein Startersteuermittel (160) zum Unterbinden des Startens der Maschine mittels des Starterschalters (258), nachdem die Maschine in Reaktion auf die spezifische Fahrzeugstoppbedingung gestoppt worden ist; **gekennzeichnet durch**
ein Sitzerfassungsmittel (254) zum Erfassen des Sitzzustands eines Fahrers; und
ein erstes Nicht-Sitzzustand-nach-Fahrzeugstopp-Steuermittel (300) zum ausnahmsweisen Erlauben des Startens der Maschine mittels des Starterschalters (258), wenn vom Sitzerfassungsmittel (254) erfasst wird, dass der Nicht-Sitzzustand des Fahrers für eine spezifische Zeitspanne nach dem Stoppen der Maschine in Reaktion auf die spezifische Fahrzeugstoppbedingung andauert.

2. Automatisches Maschinenstopp/Start-Steuersystem nach Anspruch 1, das ein zweites Nicht-Sitzzustand-nach-Fahrzeugstopp-Steuermittel umfasst, um eine Hauptstromquelle (168) abzuschalten, wenn vom Sitzerfassungsmittel (254) erfasst wird, dass der Nicht-Sitzzustand des Fahrers für eine spezifische Zeitspanne nach dem Stoppen der Maschine in Reaktion auf die spezifische Fahrzeugstoppbedingung andauert.

3. Automatisches Maschinenstopp/Start-Steuersystem nach Anspruch 1, bei dem das erste Nicht-Sitzzustand-nach-Fahrzeugstopp-Steuermittel (300) sowohl das Starten der Maschine mittels des Starterschalters (258) als auch das Starten der Maschine, das in Reaktion auf die Fahrgriffoperation durchgeführt wird, erlaubt, wenn vom Sitzerfassungsmittel (254) erfasst wird, das der Nicht-Sitzzustand des Fahrers für die spezifische Zeitspanne nach dem Stoppen der Maschine in Reaktion auf die spezifische Fahrzeugstoppbedingung andauert.

4. Automatisches Maschinenstopp/Start-Steuersystem nach Anspruch 1, das einen ersten Betriebsmodus, der das Starten der Maschine (1200) mittels des Startschalters (258) und den Leerlauf erlaubt; sowie einen zweiten Betriebsmodus aufweist, der das Starten der Maschine mittels des Starterschalters (258) und den Leerlauf beschränkt und im Fall des Stoppens eines Fahrzeugs im Fahrzustand die Maschine in Reaktion auf die spezifische Fahrzeugstoppbedingung stoppt und nach dem Stoppen der Maschine die Maschine in Reaktion auf eine Fahrgriffoperation wieder startet; und
ein Operationsumschaltmittel (300) enthält zum Umschalten des Betriebsmodus von dem zweiten Betriebsmodus in den ersten Betriebsmodus, wenn der Nicht-Sitzzustand des Fahrers, der vom Sitzerfassungsmittel (254) erfasst wird, für die spezifische Zeitspanne nach dem Stoppen der Maschine in Reaktion auf die spezifische Fahrzeugstoppbedingung andauert.

## Revendications

1. Système de commande automatique d'arrêt/démarrage d'un moteur, pour arrêter un moteur (1200), dans le cas de l'arrêt d'un véhicule à l'état de marche, en réponse à une condition spécifique d'arrêt de véhicule, et pour redémarrer le moteur, après l'arrêt du moteur, en réponse à un actionnement d'accélérateur, dans lequel ledit système de commande comprend :
un interrupteur de démarrage (258) pour démarrer le moteur ;
des moyens de commande de démarreur (160) pour empêcher le démarrage du moteur par ledit interrupteur de démarrage (258) après l'arrêt du moteur en réponse à ladite condition spécifique d'arrêt de véhicule ; **caractérisé par**
des 'moyens de détection d'état assis (254) pour détecter l'état assis d'un conducteur ; et
des premiers moyens (300) de commande d'état non assis après l'arrêt de véhicule pour permettre exceptionnellement le démarrage du moteur par ledit interrupteur de démarrage (258) si les moyens de détection d'état assis (254) détectent que l'état non assis du conducteur se poursuit sur une durée spécifique après l'arrêt du moteur en réponse à ladite condition spécifique d'arrêt de véhicule.

2. Système de commande automatique d'arrêt/démarrage d'un moteur selon la revendication 1, comprenant des seconds moyens de commande d'état non assis après l'arrêt de véhicule pour déconnecter une source d'énergie principale (168) si lesdits moyens de détection d'état assis (254) détectent que l'état non assis du conducteur se poursuit sur une durée spécifique après l'arrêt du moteur en réponse à ladite condition spécifique d'arrêt de véhicule.

3. Système de commande automatique d'arrêt/démarrage d'un moteur selon la revendication 1, dans lequel lesdits premiers moyens (300) de commande d'état non assis après l'arrêt de véhicule permettent à la fois le démarrage du moteur par ledit interrupteur de démarrage (258) et le démarrage du moteur est effectué en réponse audit actionnement d'accélérateur si lesdits moyens de détection d'état assis (254) détectent que l'état non assis du conducteur se poursuit sur ladite durée spécifique après l'arrêt du moteur en réponse à ladite condition spécifique d'arrêt de véhicule.

4. Système de commande automatique d'arrêt/démarrage d'un moteur selon la revendication 1, comprenant un premier mode de fonctionnement qui permet le démarrage du moteur (1200) par ledit interrupteur de démarrage (258) et sa marche au ralenti ; et un second mode de fonctionnement qui restreint le démarrage du moteur par ledit interrupteur de démarrage (258) et sa marche au ralenti et arrête le moteur, dans le cas de l'arrêt d'un véhicule à l'état de marche, en réponse à ladite condition spécifique d'arrêt de véhicule, et redémarre le moteur, après l'arrêt du moteur, en réponse à un actionnement d'accélérateur, et
des moyens de commutation de fonctionnement (300) pour commuter le mode de fonctionnement dudit second mode de fonctionnement audit premier mode de fonctionnement lorsque l'état non assis du conducteur détecté par lesdits moyens de détection d'état assis (254) se poursuit sur ladite durée spécifique après l'arrêt du moteur en réponse à ladite condition spécifique d'arrêt de véhicule.
